# EUROPÄISCHE PATENTSCHRIFT

(11) **EP 2 637 459 B1**
(45) Veröffentlichungstag und Bekanntmachung des Hinweises auf die Patenterteilung: **22.01.2020**
(21) Anmeldenummer: 13157679.5
(22) Anmeldetag: 04.03.2013
(51) Int. Cl.: H04W 56/00

(54) **Verfahren zur Organisation und/oder Inbetriebnahme eines Netzwerkes zur Kommunikation und Netzwerkknoten**
Method for organising and/or commissioning a network for communication and network nodes
Procédé destiné à l'organisation et/ou à la mise en service d'un réseau de communication et n'uds de réseau

(30) Priorität: 06.03.2012 DE 102012101849
(43) Veröffentlichungstag der Anmeldung: 11.09.2013
(73) Patentinhaber: Techem Energy Services GmbH, 65760 Eschborn (DE)
(72) Erfinder: Matussek, Dirk, 60318 Frankfurt am Main (DE)
(74) Vertreter: Keil & Schaafhausen Patent- und Rechtsanwälte PartGmbB

(56) Entgegenhaltungen:
- EP-A1- 1 816 830
- EP-A1- 2 282 602
- EP-B1- 1 860 830
- WO-A1-01/55865
- WO-A1-95/02294
- WO-A2-2006/102558
- DE-C2- 19 911 657
- US-A1- 2006 268 908

## Beschreibung

Die Erfindung betrifft ein Verfahren zur Organisation und/oder Inbetriebnahme eines Netzwerkes zur Kommunikation gemäß dem Oberbegriff des Anspruchs 1, insbesondere eines Funknetzwerkes bzw. allgemeiner eines drahtlosen Kommunikationsnetzwerkes vorzugsweise zur Verbrauchsdatenerfassung von mit zumindest auch durch einen Datensammler eines Gebäudes gebildeten Netzwerkknoten, zwischen denen die Kommunikation stattfindet. Die Erfindung betrifft ferner einen Netzwerkknoten und einen Master-Netzwerkknoten sowie die Verwendung des erfindungsgemäßen Netzwerkknotens und des erfindungsgemäßen Master-Netzwerkknotens zur Organisation und/oder Inbetriebnahme eines Kommunikationsnetzwerkes.

Das erfindungsgemäße Netzwerk ist insbesondere ein Funknetzwerk zur Verbrauchsdatenerfassung, das in einem Gebäude installiert ist bzw. wird. Das Gebäude ist dabei ein Komplex aus einem oder mehreren Gebäudeeinheiten (insbesondere Häusern), wobei die auch die Funktion eines Netzwerkknotens übernehmenden Datensammler des Gebäudes vorzugsweise zumindest auch von Energieverbrauchs-Messgeräten erhobene Energieverbrauchsdaten übertragen. Energieverbrauchs-Messgeräte können insbesondere Heizkostenverteiler, Wasserzähler, Wärmemengenzähler, Stromzähler, Gaszähler sein. Die Energieverbauchs-Messgeräte sind vorzugsweise an die Datensammler angeschlossen und übermitteln drahtgebunden oder drahtlos die von ihnen erhobenen Energieverbrauchswerte an mehrere oder einen jeweils zugewiesenen Datensammler. Der Begriff der drahtgebundenen Übermittlung schließt auch ein, dass der Datensammler einschließlich dessen Funktion als Netzwerkknoten und das Energieverbrauchs-Messgerät eine Baueinheit bilden. Erfindungsgemäße Netzwerkknoten können insbesondere Datensammler sein, so dass im folgenden Text die Begriffe "Netzwerkknoten" und "Datensammler" auch synonym verwendet werden. Zusätzlich zu Datensammlern mit Netzwercknotenfunktionen können jedoch bspw. auch nur als Repeater fungierende Netzwerkknoten in den Netzwerk vorgesehen sein, an die kein Energieverbrauchs-Messgerät angeschlossen ist. Auch derartige als Repeater funktionierende Netzwerkknoten sowie sonstige an der Kommunikation im Rahmen des Kommunikationsnetzwerkes teilnehmende Einheiten können nachfolgend als Datensammler bezeichnet werden, auch wenn sie im eigentlichen Sinne keine Daten sammeln, insbesondere nicht von angeschlossenen Energieverbrauchs-Messgeräten. Bevorzugt bezieht sich die Erfindung jedoch auf ein mehrheitlich oder sogar vollständig aus Datensammlern mit Netzwerkknotenfunktion aufgebautes Netzwerk zur Kommunikation. Die Kommunikation zwischen den einzelnen Netzwerkknoten in dem Netzwerk erfolgt erfindungsgemäß insbesondere bidirektional.

Zur Inbetriebnahme und/oder Organisation des Netzwerks ist vorgesehen, dass die miteinander kommunizierenden Netzwerkknoten des Netzwerkes synchronisiert werden und eine Datenübertragung zwischen den synchronisierten Netzwerkknoten nach einem Zeitschema stattfindet, in dem festgelegt ist, zu welchen Zeitpunkten, insbesondere im Sinne von Zeitintervallen bzw. Zeitschlitzen, eine Datenübertragung zwischen welchen Netzwerkknoten in welcher Übertragungsrichtung erfolgen kann. Je nach Übertragungsrichtung werden die Zeitintervalle bzw. Zeitschlitze auch als Sendezeitschlitze bzw. Empfangszeitschlitze bezeichnet. Die vorstehende Art der Übertragung wird im Folgenden auch kurz als synchronisierte Datenübertragung bezeichnet. Sie ist auch grundsätzlich als Zeitschlitzverfahren bekannt.

Das erfindungsgemäß vorgeschlagene Netzwerk weist nach Einrichtung der Inbetriebnahme eine hierarchische Netzwerktopologie mit einem zentralen Master-Netzwerkknoten und mit mit diesem baumförmig über eine oder mehrere Hierarchieebenen verbundene Netzwerkknoten auf. Durch die hierarchische Topologie ist es so, dass ein Netzwerkknoten direkt oder über andere zwischengeschaltete Netzwerkknoten mit dem Master-Netzwerkknoten kommunizieren kann. Die Kommunikation zwischen den Hierarchieebenen erfolgt dabei derart, dass der Master-Netzwerkknoten die niedrigste Hierarchieebene bildet und der Master-Netzwerkknoten jeweils direkt mit Netzwerkknoten der nächsthöheren Hierarchieebene kommuniziert. Mit Netzwerkknoten in noch höheren Hierarchieebenen kommuniziert der Master-Netzwerkknoten durch Vermittlung von Netzwerkknoten in zwischenliegenden Hierarchieebenen, indem die Datenpakete weitergeleitet werden. Dies bedeutet, dass Netzwerkknoten der zwischenliegenden Hierarchieebenen Datenpakete empfangen und diese zur Weiterleitung wieder aussenden. Dies erfolgt unabhängig von der Kommunikationsrichtung hin zu dem Master-Netzwerkknoten oder ausgehend von dem Master-Netzwerkknoten hin zu einem für den Empfang vorgesehenen Netzwerkknoten.

In diesem Text wird der zentrale Master-Netzwerkknoten als niedrigste Hierarchieebene bezeichnet, zu der hin alle gesammelten Daten übertragen werden und von der aus ggf. Befehle zur Organisation des Netzwerkes ausgesendet werden. Natürlich kann diese Hierarchieebene sprachlich auch als höchste Hierarchieebene bezeichnet werden, wobei dann die Beschreibung im Hinblick auf die Begriffe "höhere Hierarchieebene" bzw. "niedrigere Hierarchieebene" jeweils entsprechend angepasst werden muss.

In einem derartig aufgebauten hierarchischen Netzwerk erfolgt die Synchronisation erfindungsgemäß vorzugsweise auf den zentralen Master-Netzwerkknoten als zeitdefinierende Einheit, wozu der zentrale Master-Netzwerkknoten in vorgegebenen Synchronisations-Sendeintervallen Synchronisations-Datenpakete aussendet, die ggf. von zwischenliegenden Hierarchieebenen weitergeleitet werden. Diese Synchronisations-Datenpakete dienen dazu, sämtliche am Netzwerk teilnehmende Netzwerkknoten während des laufenden Betriebs synchron zu halten.

Datensammlernetzwerke dieser Art werden bspw. in Systemen zur Verbrauchswerterfassung von Wärme, Wasser, Gas oder Strom in Wohn- oder Gewerbegebäuden regelmäßig eingesetzt. Hierbei werden als Messgeräte meist batteriebetriebene Verbrauchserfassungsgeräte verwendet, die regelmäßig per Funk Verbrauchswerte und ggf. andere Prozesswerte bzw. -daten an Datensammler im Funkreichweitenbereich der Verbrauchserfassungsgeräte übertragen.

Die Verbrauchserfassungsgeräte (Energieverbrauchs-Messgeräte) haben aus Gründen der Wirtschaftlichkeit Batterielebensdauern von mehr als zehn Jahren, um häufigere Batterietausch-Wartungsarbeiten zu vermeiden. Auch die Datensammler sind typischerweise batterieversorgt, um die Kosten und den Aufwand für eine Verkabelung zur Netzversorgung zu sparen. Auch hier werden vergleichbare Batteriestandzeiten von mindestens etwa 10 Jahren angestrebt, um beide Geräte (Datensammler und Verbrauchserfassungsgeräte) in denselben Wartungsintervallen und Wartungseinsätzen warten zu können.

Vor allem in größeren Gebäuden werden wegen der begrenzten Reichweite der Funkverbindungen zwischen Verbrauchserfassungsgeräten und einem zentralen Datensammler meist mehrere Datensammler benötigt. Diese mehreren Datensammler werden in solchen Installationen typischerweise über ein lokales Kommunikationsnetzwerk miteinander verbunden. Dies ermöglicht eine zentrale und damit wirtschaftliche Ankopplung eines der Datensammler über eine WAN(Wide Area Network)-Schnittstelle über ein meist öffentliches Kommunikationsnetz, wie das Internet, eine Telefonverbindung oder eine Mobilfunkverbindung, an eine zentrale Leitstelle, in der die Verbrauchsdaten weiterverarbeitet werden. Da die Datensammler untereinander in einem Netzwerk zur Kommunikation miteinander verbunden sind, braucht nur einer der Datensammler eine derartige Schnittstelle (Gateway zu dem WAN) aufzuweisen. Dieses lokale Datensammlernetzwerk ist in der Regel als Funknetzwerk ausgeführt, wobei die Erfindung nicht auf eine Funkdatenübertragung beschränkt ist, sondern bevorzugt im Zusammenhang mit jedem drahtlos arbeitenden Netzwerk zur Kommunikation einsetzbar ist.

Um den geforderten langjährigen Batteriebetrieb der Datensammler des Netzwerks zu ermöglichen, wird meist eine bereits beschriebene synchrone Datenübertragung durchgeführt. Diese findet in einem dedizierten Zeitschema statt, in dem genau festgelegt ist, zu welchem Zeitpunkten bzw. in welchen Zeitschlitzen eine Datenübertragung zwischen welchen Netzwerkknoten, die meist durch die Datensammler gebildet sind, in welcher Übertragungsrichtung möglich sind. Hierbei wird auch geregelt, wann Datenweiterleitungen durch zwischengeschaltete Netzwerkknoten erforderlich sind, damit die Daten von einem Datensammler hin zu einem zentralen Datensammler geleitet werden bzw. Datenpakete des zentralen Master-Datensammlers bei einem jeden Datensammler einschalten.

Die Sender und Empfänger der Datensammler brauchen deshalb nur für die kurze Zeitdauer eingeschaltet zu werden, in denen entsprechend dem dedizierten Zeitschema eine Kommunikation stattfindet bzw. stattfinden kann. Der weitaus größte Teil der Betriebsdauer (außerhalb der vorgesehenen Zeitschlitze) kann kommunikationslos und somit stromsparend gehalten werden, was eine notwendige Voraussetzung für einen langjährigen Batteriebetrieb der Datensammler ist.

Ein solches synchrones Datensammlernetzwerk ist bspw. in der DE 199 11 657 C2 beschrieben, bei dem die Übertragung zwischen in Hierarchieebenen organisierten Sammelstellen in Zeitschlitzblöcken stattfindet, die entsprechend der Übertragungsrichtung unterschiedlich aufgebaut sind. Die Zeitschlitzblöcke werden für die Abwärts-Datenübertragung und die Aufwärts-Datenübertragung in verschiedenen Zeitsegmenten zusammengefasst. In jedem Zeitschlitzblock kann eine Datenübertragung von einer Hierarchieebene zu der benachbarten Hierarchieebene erfolgen, und zwar in Aufwärtsrichtung oder in Abwärtsrichtung. Die Gesamtheit der zur Datenübertragung von der niedrigsten bis zur höchsten Hierarchieebene benötigten Zeitschlitzblöcke sowie ein Reservezeitschlitzblock für andere Funktionen werden zu dem Zeitsegment zusammengefasst.

Bei der Inbetriebnahme bzw. Neukonstruktion des Funknetzwerkes der DE 199 11 657 A1 wird jeder Station eine fortlaufende Nummer und damit ein zyklischer Zeitschlitz im Zeitschlitzblock zugeteilt, am einfachsten entsprechend der Stationsnummer. In einem Synchronisationstelegramm sendet dann eine zentrale Datenverwaltungsstation die Hierarchienummern der verschiedenen Datensammelstationen und eine Liste der zuletzt von der Datenverwaltungsstation empfangen Datensammelstationen. Alle diese Botschaft empfangenden Datensammelstationen, die in dieser Liste enthalten sind, definieren sich dann jeweils als zur nächsthöheren Hierarchieebene zugehörig, bezogen auf die Hierarchieebene der sendenden Datensammelstationen bzw. der Datenverwaltungsstationen. Im normalen Betrieb sendet die zentrale Datenverwaltungsstation regelmäßig die Synchronisationstelegramme an die anderen Datensammelstationen aus, die ihrerseits die Synchronisationstelegramme an weitere Datensammelstationen weiterleiten, welche nicht direkt mit der zentralen Datenverwaltungsstation kommunizieren können. Basierend auf den Sendezeitpunkten der Synchronisationstelegramme wird ein netzwerkweites Zeitschema aufrechterhalten, das den beschriebenen stromsparenden Kommunikationsbetrieb in einem Zeitschlitzverfahren ermöglicht.

Im Falle eines Synchronisationsverlusts einer Datenstation kann sich diese, vorausgesetzt ihre funktechnischen Nachbarn sind nach wie vor synchron und ihre Hierarchie ist unverändert, dadurch resynchronisieren, dass sie in einem Zeitschlitzblock ein Datenpaket eines Nachbarn erhält und dieses auswertet.

Im Falle einer Erstinbetriebnahme, d.h. wenn noch keine Hierarchie in dem Funknetzwerk bekannt ist, hört jede Datenstation in jedem Netzanalyse-Zeitschlitzblock auf alle ihre Nachbarn. Hierdurch erhält sie die Identifikationsnummern aller Datenstationen, die in ihrem Empfangsbereich liegen. Zur endgültigen Hierarchienummer-Bestimmung sendet die zentrale Datenverwaltungsstation in vorgegebenen Zeitabständen bei der nächsten Synchronisierung für eine allgemeine topologische Neuorientierung ein erweitertes Datenpaket, in welchem sie die Liste all der Datenstationen anhängt, die sie selbst empfangen konnte. Jede benachbarte Datenstation, die dieses erweiterte Datenpaket empfängt und die Nummer in dieser Liste vorfindet, weiß, dass sie in der ersten Hierarchieebene oberhalb der Hierarchieeben der zentralen Datenverwaltungsstation ist. Die Feststellung von benachbarten Datenstationen erfolgt dann analog für die höheren Hierarchieebenen. Damit kann die vollständige Neuanalyse der Netzwerktopologie innerhalb eines Zeitsegments abgeschlossen werden.

Auch in der EP 1 860 830 B1 wird ein Verfahren zur Inbetriebnahme eines hierarchischen Sensornetzwerkes beschrieben, bei dem die einzelnen Sensoren regelmäßig Synchronisations-Datenpakete aussenden, um sich mit ihren benachbarten Sensoren synchron zu halten. Um hier bei der Inbetriebnahme Batterieenergie zu sparen, werden einem neu zu integrierenden Sensor durch ein mobiles Installationsgerät bereits Synchronisationsinformationen mitgegeben, wodurch die Synchronisierung stromsparend gestaltet wird. Als alternatives Synchronisationsverfahren wird für den zu synchronisierenden Datensammler eine Dauerempfangsperiode von der Dauer mindestens eines Sendeintervalls der Synchronisations-Datenpakete vorgeschlagen, damit der zu synchronisierende Datensammler sich auf diese Weise in das Funknetzwerk einbinden kann. Aus der WO 01/55865 A1 wird eine Selbstkonfiguration eines jedoch nicht hierarchisch organisierten Netzwerkes beschrieben, bei der nicht im Netzwerk befindliche Knoten eine Anforderung zur Aufnahme in das Netzwerk senden. Diese wird durch einen zentralen oder einen bereits in das Netzwerk aufgenommenen Knoten beantwortet, wobei die Knoten aus den Antworten und mit den Antworten erhaltenen Qualitätsmerkmalen der Funkverbindung den Übertragungsweg eigenständig festlegen. Hier gliedert sich jeder Knoten also selbsttätig an einen bereits synchronisierten Knoten an und legt seinen Übertragungsweg eigenständig fest. Dies funktioniert in dieser Form nur bei nicht hierarchisch organisierten Funknetzwerken, bei denen die einzelnen Knoten jeweils lange Empfangsphasen aufweisen, um zufällige Übertragungen anderer Knoten zu empfangen und ggf. weiterzuleiten. Für ein energiesparendes Funknetzwerk ist ein solches Verfahren nicht geeignet, da in der Regel lange Dauerempfangsphasen bei den einzelnen Knoten vorgesehen werden müssen und die Datenübertragung nicht zielgerichtet durch Hierarchieebenen mit möglichst wenigen Zwischenübertragungen funktioniert.

Aus der WO 2006/102558 A2 ist ein System zur effektiven Fehlerbehebung in hierarchisch gegliederten Drahtlos-Mesh-Netzwerken bekannt. Das Netzwerk weist ein Steuerungssystem und eine Vielzahl von hierarchisch gegliederten Netzwerkknoten auf. Die hierarchische Konfiguration kann derart dynamisch ausgebildet sein, dass die Eltern-Kind-Beziehungen zwischen den Netzwerkknoten aufgrund bspw. Überlastung oder Störungen geändert werden können. Wenn ein Kindknoten die Synchronisation zu seinem Elternknoten verliert, sendet er Sync-Request-Datenpakete aus und wartet auf die Antwort eines Elternknotens.

In the WO 95/02294 A1 werden ein System und ein Verfahren zur zeitlichen Synchronisierung von mehreren Computersystemen über ein Drahtlosnetzwerk beschrieben. Wenn sich ein Netzwerkknoten einem existierenden Netzwerk anschließen will, sendet er eine Join-Request-Mitteilung aus. Wenn ein Netzwerkknoten diese Mitteilung empfängt, sendet er eine Antwort-Mitteilung aus, die der sich an das Netzwerk anschließende Knoten zu Synchronisationszwecken verwenden kann. Dabei wird eine geeignete Frequenz in einem Frequence Hopping Spread Spectrum (FHSS) gesucht.

In dem vorbeschriebenen Stand der Technik zu hierarchisch aufgebauten, synchronen Datensammlernetzwerken werden keine besonderen Maßnahmen getroffen, um das Datensammlernetzwerk energieeffizient in Betrieb zu nehmen und zu synchronisieren. Bei der DE 199 11 657 C2 kommt per se nur eine Dauerempfangsphase in Frage, die so lange ist, dass ein zu synchronisierender Datensammler mit ausreichender Wahrscheinlichkeit Synchronisations-Datenpakete eines benachbarten Datensammlers empfängt aus denen er dann auf das synchrone Netzwerk-Timing schließen und in den stromsparenden synchronen Betriebsmodus übergehen kann.

Je nach Sendehäufigkeit der Synchronisations-Datenpakete können solche Dauerempfangsphasen so lange sein müssen, dass sie im Rahmen der verfügbaren Batterieenergie nur selten, bspw. nur zweimal im Jahr möglich sind, sofern eine Gesamt-Batterielebensdauer von mehr als 10 Jahren angestrebt wird. Damit kann das Datensammlernetzwerk nur selten auf Änderungen der Funkausbreitungsbedingungen, wie sie in Wohn- und Gewerbegebäuden durch sich bewegenden Personen, Änderungen der Möblierung oder Umbaumaßnahmen vorkommen können, reagieren. So können einzelne Datensammler oder Gruppen von Datensammlern bei Funkstreckenausfällen über längere Zeiträume vom Rest des Datensammlernetzwerkes getrennt bleiben.

Um dies zu vermeiden, wird in der EP 1 860 830 B1 vorgeschlagen, einen neu in ein Sensornetzwerk einzubindenden Sensor die Synchronisations-Information der bereits in Betrieb befindlichen Sensorknoten mit Hilfe eines mobilen Installationsgerätes zu übermitteln. Ein Nachteil dieser Lösung ist, dass eine in Betrieb nehmende Person (Monteur, Servicetechniker) zur Inbetriebnahmezeit vor Ort sein muss, um das mobile Installationsgerät zu bedienen. Hierdurch wird eine zeitliche Verbindung von Montage und Inbetriebnahme erzwungen. In der Praxis kommt es jedoch häufig vor, dass bei einem Montagetermin nur Teile eines auszustattenden Gebäudekomplexes zugänglich sind. So kann es bspw. sein, dass nur zwei Gebäudeteile mit Sensoren ausgestattet werden können, zwischen denen keine direkte Funkverbindung möglich ist, während ein dazwischen liegender Gebäudeteil aus organisatorischen Gründen zunächst unzugänglich bleibt. In diesem Fall kann zwar mit dem mobilen Installationsgerät die Installationsinformation der Sensoren eines Gebäudeteils zu dem des anderen, entfernten Gebäudeteils gebracht werden. Wegen der fehlenden Funkverbindung diese Synchronisation im laufenden Betrieb nicht aufrechterhalten, also durch Empfang von Synchronisationstelegrammen aktualisiert bzw. nachsynchronisiert werden. Die Synchronisationsinformationen der Sensoren können also im Laufe der weiteren Zeit nicht aufeinander abgestimmt bleiben und laufen, bspw. aufgrund sich akkumulierender Uhrentoleranzen, unterschiedlichen Betriebstemperaturen oder dergleichen, auseinander.

Wenn dann zu einem späteren Zeitpunkt der mittlere Gebäudeteil zugänglich wird, kann die Installation oder die Inbetriebnahme der dort vorgesehenen Sensoren nachgeholt werden. Die Übermittlung der Synchronisationsinformationen von bzw. an die Sensoren der beiden zuerst ausgestatteten Gebäudeteile mit dem mobilen Installationsgerät ist jetzt allerdings abhängig von der Möglichkeit des Zugangs zu diesem Gebäudeteil. Diese kann nun wiederrum aus organisatorischen Gründen verwehrt sein.

Zusammenfassend ist die in der EP 1 816 830 B1 beschriebene Inbetriebnahme mit mobilen Installationsgeräten durch die Abhängigkeit des direkten Zugangs zu den Sensoren bei diesem Prozess wirtschaftlich aufgrund des erhöhten Prozess- und Organisationsaufwands nachteilig, so dass der energetische Vorteil bei der Inbetriebnahme mit den mobilen Installationsgeräten wieder zunichte gemacht wird.

Ein weiterer Nachteil dieses beschriebenen Inbetriebnahmeverfahrens ist, dass es zur Re-Synchronisation von Sensorknoten, die während des laufenden Netzwerkbetriebs die Synchronisation zu ihren Nachbarknoten verloren haben, nicht geeignet ist. Dies wäre nur möglich, wenn in diesem Fall eine Person mit dem mobilen Installationsgerät zu dem betroffenen nicht mehr synchronen Sensorknoten ginge und diesem die Synchronisationsinformationen erneut übermitteln würde. Auch dies ist mit einem erheblichen organisatorischen Aufwand aufgrund zusätzlicher Wartungsarbeiten verbunden und wird in der Praxis daher häufig nicht durchgeführt.

Sofern diese Nachteile vermieden werden sollen, schlägt die EP 1 816 830 B1 selbst als Lösungsvariante den bereits erwähnten Dauerempfang eines neu zu synchronisierenden Sensorknotens für mindestens ein Sendeintervall der Synchronisations-Datenpakete vor. Praktisch muss wegen der möglicherweise gestörten Funkübertragung von einem nötigen Dauerempfang von vier bis sechs Sendeintervallen der Synchronisations-Datenpakete ausgegangen werden, bis die Synchronisation mit ausreichend geringer Reststörwahrscheinlichkeit gelingt, da beispielsweise zufällige Funkkollisionen den Empfang eines Synchronisations-Datenpakets verhindern könnten. Bei den in der EP 1 816 830 B1 vorgeschlagenen Synchronisationsintervallen von vielen Minuten bis zu einem Tag ergeben sich erforderliche Dauerempfangsperioden von einer Stunde bis zu mehreren Tagen Dauer. Dies kann von batteriebetriebenen Sensoren in der langjährigen Lebensdauer nur selten geleistet werden, wie bereits erwähnt wurde.

Weiterhin ist bei dem in der EP 1 816 830 B1 vorgeschlagenen Inbetriebnahmeverfahren die dezentrale Vergabe von Hierarchieebenen nachteilig, die durch Abgleich der Hierarchieebenen-Nummern benachbarter Sensorknoten durchgeführt wird. Dabei können sich neben dem eigentlich vorgesehenen zentralen Netzwerkknoten zunächst weitere temporäre zentrale Knoten bilden, was als Inselbildung bezeichnet wird und zu einer unbeabsichtigten Ausbildung von unabhängigen, nicht miteinander verbundenen Teilmengen der beteiligten Sensoren führen kann.

Eine temporäre Inselbildung während der Inbetriebnahme wäre akzeptabel. Es besteht jedoch die Gefahr, dass die Inselbildung dauerhaft bestehen bleibt. Zur Lösung wird hier in der EP 1 816 830 B1 ein statistisches Verfahren vorgeschlagen, das jedoch prinzipiell nicht in der Lage ist, eine solche Inselbildung sicher auszuschließen. Deshalb wird nach Abschluss der Inbetriebnahme eine Kontrolle der Netzwerktopologie wiederum mit einem mobilen Installationsgerät empfohlen, und zwar möglichst an mehreren Sensornetzknoten. Dieser Kontrollschritt bedeutet weiteren personellen Aufwand vor Ort, was sich neben der Wartezeit, die zwischen Inbetriebnahmebeginn und einem möglichst frühen sinnvollen Kontrollzeitpunkt notwendig ist, negativ auf die Wirtschaftlichkeit des Systems auswirkt.

Vor diesem Hintergrund ist es Aufgabe der vorliegenden Erfindung, ein besonders energieeffizientes Verfahren zur Organisation und/oder Inbetriebnahme eines Kommunikationsnetzwerkes vorzuschlagen, das insbesondere für batteriebetriebene Netzwerkknoten bzw. Datensammler geeignet ist. Je nach Ausgestaltung des Verfahrens soll die Organisation und/oder Inbetriebnahme so effizient sein, dass eine ausreichend häufige Re-Synchronisation asynchron gewordener Datensammler möglich ist, und so ein Netzbetrieb ohne lange Teilausfallzeiten gewährleistet werden kann. Ferner soll der laufende Betrieb und die Inbetriebnahme ohne manuelle Eingriffe oder Hilfsmittel vor Ort erfolgen können, ohne dass die Gefahr einer Inselbildung, d.h. einer selbständigen unerwünschten Aufteilung in Teil-Kommunikationsnetzwerke, besteht.

Diese Aufgabe wird erfindungsgemäß mit einem Verfahren der eingangs genannten Art gemäß den Merkmalen des Anspruchs 1 gelöst. Bei dem Verfahren zur Organisation und/oder Inbetriebnahme des Netzwerkes, bei dem ein oder mehrere Netzwerkknoten synchronisiert oder re-synchronisiert werden sollen, senden in einer ersten Inbetriebnahmephase nicht synchronisierte, d.h. asynchrone, Netzwerkknoten vorzugsweise Hilfe-Datenpakete in vorgegebenen Hilfe-Sendeintervallen aus, welche erfindungsgemäß vorzugsweise wesentlich kürzer sind als die Synchronisations-Sendeintervalle, mit denen Synchronisations-Datenpakete in dem Netzwerk versendet werden. Die Hilfe-Sendeintervalle können insbesondere etwa ein Zehntel bis ein Zwanzigstel der Synchronisations-Sendeintervalle betragen. Erfindungsgemäß schalten die nicht synchronisierten bzw. asynchronen Netzwerkknoten im Anschluss an das Aussenden eines Hilfe-Datenpakets für ein Antwort-Empfangsintervall auf Dauer-Empfang, wobei das Antwort-Empfangsintervall erfindungsgemäß vorzugsweise ein kurzes Empfangszeitfenster ist, dessen Länge derart bemessen sein kann, dass es ein als direkte Reaktion auf den Empfang eines Hilfe-Datenpakets ausgesendetes Antwort-Datenpaket empfangen kann. Die Dauer eines erfindungsgemäß sinnvollen Empfangszeitfensters kann vorzugsweise zwischen 50 und 500 ms, insbesondere etwa zwischen 100 und 125 ms liegen.

Die Dauer des Empfangszeitfensters kann gemäß einer vorteilhaften Ausgestaltung der Erfindung so gewählt, dass es ein Mehrfaches der Dauer eines Antwort-Datenpakets beträgt. Dies ist in dem Fall von Nutzen, wenn mehrere bereits synchrone Netzwerkknoten die Hilfe-Datenpakete des noch zu synchronisierenden Netzwerkknotens beantworten. Die synchronen Netzwerkknoten wählen dazu als Sendezeitpunkt ihres jeweiligen Antwort-Datenpakets einen zufälligen Zeitpunkt innerhalb des Empfangszeitfensters des noch zu synchronisierenden Netzwerkknotens. So ist mit hoher Wahrscheinlichkeit der Empfang mehrerer Antwort-Datenpakete möglich. Dies ist vor dem Hintergrund sinnvoll, dass die Antwort-Datenpakete zwar dieselben, netzwerkweit gültigen Synchroninformationen enthalten, aber der noch zu synchronisierende Netzwerkknoten optional mit den gemessenen Empfangsfeldstärken der mehreren Antwort-Datenpakete den (zukünftigen) Elternknoten mit dem stärksten Empfangspegel auswählen kann, um sich auf die von diesem weitergeleiteten Synchronisations-Datenpakete zu synchronisieren. Diese Option wird auch später in anderem Zusammenhang noch ausführlich beschrieben.

Ferner schalten der Master-Netzwerkknoten und/oder synchronisierte Netzwerkknoten zur Synchronisation eines nicht synchronisierten Netzwerkknotens vorzugsweise gezielt für ein Hilfe-Empfangsintervall auf Dauerempfang und senden nach Empfang eines Hilfe-Datenpakets unmittelbar ein Antwort-Datenpaket an den nicht synchronisierten Netzwerkknoten aus, wobei das Antwort-Datenpaket eine Synchronisationsinformation enthält. Das unmittelbare Aussenden erfolgt erfindungsgemäß derart, dass das ausgesendete Antwort-Datenpaket innerhalb des Antwort-Empfangsintervalls durch den nicht synchronisierten Netzwerkknoten empfangen werden kann.

Anschließend werden dieses Antwort-Datenpaket durch den nicht synchronisierten Netzwerkknoten empfangen und die Synchronisationsinformation ausgewertet. Dies hat zur Folge, dass der Netzwerkknoten danach zumindest zur Teilnahme an der Kommunikation in dem Netzwerk synchronisiert ist.

Wie bereits der Name sagt, handelt es sich bei der Synchronisationsinformation erfindungsgemäß um eine Information, die dem zu synchronisierenden (noch asynchronen) Netzwerkknoten das Erkennen oder Ableiten des Zeitschemas der Datenübertragung in dem Netzwerk einschließlich seiner Zeitbasis ermöglicht. Dazu kann die Synchronisation insbesondere den Aussendezeitpunkt bzw. die Dauer bis zum Aussendezeitpunkt des nächsten Synchronisations-Datenpaketes enthalten, das von dem Master-Netzwerkknoten ausgesendet bzw. von einem synchronisierten Netzwerkknoten einer höheren Hierarchieebene nach Empfang wieder ausgesendet wird. Ferner kann die Synchronisationsinformation eine Zuweisung des Zeitpunkts enthalten, zu dem der durch das Antwort-Datenpaket adressierte Netzwerkknoten entsprechend dem Zeitschema an der Kommunikation in dem Netzwerk teilnehmen darf.

Sobald der zu synchronisierende Netzwerkknoten vollständig synchronisiert ist, ist die zuvor erwähnte erste Inbetriebnahmephase abgeschlossen.

Der Master-Netzwerkknoten ist als der ausgezeichnete Netzwerkknoten, auf den alle anderen Netzwerkknoten synchronisiert werden, immer ein synchronisierter Netzwerkknoten. Daher zählt der Master-Netzwerkknoten auch immer mit zu den synchronisierten Netzwerkknoten. Im vorliegenden Text kann daher unter einem synchronisierten Netzwerkknoten, sofern der Zusammenhang dies erlaubt, auch immer der Master-Netzwerkknoten verstanden werden, der funktechnisch vorzugsweise wie ein normaler Netzwerkknoten aufgebaut ist und lediglich eine darüber hinausgehende Logik zur Inbetriebnahme und Organisation des Netzwerkes enthält.

Unter dem gezielten Schalten auf Dauerempfang ist erfindungsgemäß zu verstehen, dass der Master-Netzwerkknoten bzw. der synchronisierte Netzwercknoten auf irgendeine Art und Weise Kenntnis über zu synchronisierende Netzwerkknoten hat und nur dann für das Hilfe-Empfangsintervall auf Dauerempfang schaltet. Wie nachfolgend noch ausführlich beschrieben, kann die Kenntnis durch eine Liste zu synchronisierender Datensammler, eine Mitteilung des Inbetriebnahmemodus über eine Schnittstelle bzw. über eine Datenauswertung einer bereits funktionierenden Kommunikation in dem Netzwerk erfolgen.

Zur Identifikation des zu synchronisierenden Netzwerkknotens kann das Hilfe-Datenpaket, das durch den zu synchronisierenden, nicht synchronisierten bzw. asynchronen Netzwerkknoten ausgesendet wird, vorzugsweise eine Identifikation, insbesondere eine Identifikationsnummer, des Netzwerkknotens bzw. Datensammlers enthalten, die vorzugsweise einmalig für alle Netzwerkknoten bzw. Datensammler ist, zumindest dabei einmalig für Netzwerkknoten oder Datensammler in Sende- und Empfangsreichweite des Netzwerkes. Als einmalig im Sinne dieser Anmeldung gelten auch Identifikationen, die mit einer vorgegebenen statistischen Wahrscheinlichkeit innerhalb der Sende- und Empfangsreichweite eines drahtlosten Kommunikationsnetzwerks einmalig sind.

Das erfindungsgemäß vorgeschlagene energie- und aufwandseffiziente Verfahren zur Organisation bzw. Inbetriebnahme eines Netzwerkes sieht bei neu synchronisierenden Datensammlern (respektive Netzwerkknoten) also keine Dauerempfangsphase vor, die bei einem Synchronisationsintervall von beispielsweise 15 Minuten das vier- bis sechsfache, also 1 bis 1,5 Stunden dauern müsste, sondern ein regelmäßiges Aussenden eines Hilfe-Datenpakets in Hilfe-Sendeintervallen mit einer deutlich größeren Häufigkeit als das Aussenden der Synchronisations-Datenpakete in Synchronisations-Sendeintervallen, über das die bereits synchronen Netzwerkknoten bzw. Datensammler des Netzwerks synchron gehalten werden. Ein typisches Hilfe-Sendeintervall könnte beispielsweise etwa 60 Sekunden betragen. Der Master-Netzwerkknoten und/oder die bereits synchronen Netzwerkknoten des Netzwerkes (also die synchronisierten Netzwerkknoten) sind zur Synchronisation des neuen Netzwerkknotens dann für etwa vier bis sechs Hilfe-Sendeintervalle auf Dauerempfang in ihrem Hilfe-Empfangsintervall, d.h. in diesem Beispiel also für 4 bis 6 Minuten. Die Dauer des Dauerempfangs ist gegenüber dem Stand der Technik um einen Faktor von mehr als 10 kürzer. Je kürzer also das Hilfe-Sendeintervall gewählt wird, umso kürzer kann die Dauer des Dauerempfangs und damit der durchschnittliche Energieverbrauch bei den bereits synchronisierten Netzwerkknoten gewählt werden.

Kurz nach der Aussendung eines Hilfe-Datenpakets geht der zu synchronisierende Datensammler (Netzwerkknoten) für ein kurzes Antwort-Empfangsintervall (Empfangszeitfenster) auf Dauerempfang, um ggf. Antworten bereits synchroner Datensammler des Netzwerks zu empfangen. Das kurze Hilfe-Sendeintervall wird jedenfalls dadurch ermöglicht, dass es nur vorübergehend in der Phase der anfänglichen Nicht-Synchronität oder in einer kurzen Phase der vorübergehenden Nicht-Synchronität gesendet werden muss. Die meiste Zeit seiner Lebensdauer ist der Datensammler jedoch im stromsparenden synchronen Betrieb. Außerdem sind die im Hilfe-Datenpaket auszusendenden Informationen kurz, so dass trotz vorzugsweise höchster oder normaler Sendeleistung, mit der das Hilfe-Datenpaket ausgesendet wird, nur eine recht geringe energetische Belastung erfolgt.

Insgesamt wird hierdurch also ein besonders effektives Inbetriebnahmeverfahren für ein Netzwerk bzw. die das Netzwerk bildenden Netzwerkknoten respektive Datensammler vorgeschlagen.

Gemäß einer besonders bevorzugten Weiterbildung des erfindungsgemäß vorgeschlagenen Verfahrens kann vorgesehen sein, dass der Master-Netzwerkknoten vorzugsweise nach Abschluss der ersten Inbetriebnahmephase, in welcher mindestens einer oder mehrere nicht synchronisierte Netzwercknoten synchronisiert wurden, und/oder in konfigurierbaren Zeitabständen dann in einer folgenden zweiten Inbetriebnahmephase ein Anforderungs-Datenpaket an alle synchronisierten Netzwerkknoten aussendet und diese insbesondere dadurch veranlasst werden, zu den ihnen zugewiesenen Zeitpunkten, d.h. in dem ihnen durch das Zeitschema zugewiesenen Sendezeitschlitzen, ein oder mehrere vorzugsweise vordefinierte Datenpakete mit vorzugsweise der maximalen Sendeleistung (sofern die Sendeleistung im Betrieb des Netzwerkes ggf. einstellbar ist) auszusenden. Ferner werden die synchronisierten Netzwerkknoten dazu veranlasst, zu allen Empfangszeitpunkten, d.h. in allen Empfangszeitschlitzen des Zeitschemas, die Datenpakete anderer Netzwerkknoten des Netzwerks, d.h. der bereits synchronisierten Netzwerkknoten, zu empfangen, wobei die Empfangsfeldstärke, zumindest soweit dies möglich ist, gemessen und in einer anschließenden Kommunikation an den zentralen Master-Netzwerkknoten übertragen wird. Sofern der Master-Netzwerkknoten als synchronisierter Netzwerkknoten selbst die Datenpakete anderer Netzwerkknoten empfängt und die Empfangsfeldstärke misst, ist unter Übertragung im Sinne der Erfindung ein Zurverfügungstellen in einer geeigneten Form zu verstehen. Anschließend ermittelt der Master-Netzwerkknoten unter Verwendung der Empfangsfeldstärken eine vorteilhafte Netzwerktopologie und teilt den Netzwerkknoten in einem Organisations-Datentelegramm diese Netzwerktopologie mit.

Das Mitteilen der Topologie kann vorzugsweise derart aussehen, dass jedem Netzwerkknoten in dem Netzwerk ein in der nächstniedrigeren Hierarchieebene liegender Elternknoten und/oder - sofern noch vorhanden - in der nächst höheren Hierarchieebene ein Kindknoten mitgeteilt werden, beispielsweise durch Mitteilung einer geeigneten Identifikation der Netzwerkknoten. Dies können, wie nachfolgend noch beschrieben wird, in dem Netzwerk einmalig vergebene Knotennummern sein. Damit weiß jeder Netzwerkknoten, wann er für eine Kommunikation von dem Master-Netzwerkknoten auf Empfang schalten muss, um ein Datenpaket von dem Elternknoten weitergeleitet zu bekommen und zu empfangen sowie ggf. weiterzuleiten, und wann er für eine Kommunikation zu dem Master-Netzwerkknoten auf Empfang schalten muss, um ein Datenpaket von einem Kindknoten zu empfangen, um dieses dann aktiv wieder auszusenden und weiterzuleiten.

Sofern die Empfangsfeldstärke nur in einem Elternknoten bzw. einem Kindknoten zu dem Elternknoten bekannt ist, kann erfindungsgemäß angenommen werden, dass die Empfangsqualität symmetrisch ist. Dies gilt für den Fall, dass dem Master-Netzwerkknoten nicht zu jeder bestehenden Verbindung eine Empfangsfeldstärke übermittelt werden kann, beispielsweise weil diese aufgrund eines Netzwerkfehlers nicht erhoben werden konnte oder ein Netzwerkknoten aufgrund seiner Beschaffenheit und/oder seines Konfigurationszustands nicht in der Lage war, die Empfangsfeldstärke zu messen.

Bei der Ermittlung der Netzwerktopologie können außer der Empfangsfeldstärke auch die Auslastung eines Netzwerkknotens (Sende- und Empfangszeiten, insbesondere zur Weiterleitung von Datenpaketen aus höheren und/oder niedrigeren Hierarchieebenen, die Anzahl der einem Netzwerkknoten zugewiesenen Messgeräte zur Verbrauchserfassung, verbleibende Batteriekapazität oder dgl. Informationen) zugrunde gelegt werden.

Bei dem vorgeschriebenen Verfahren müssen die bereits synchronen Netzwercknoten bzw. Datensammler, wie oben bereits erwähnt wurde, eine Dauerempfangsphase zum Empfang der Hilfe-Datenpakete (Hilfe-Empfangsintervall) einrichten, das gemäß einer typischen Konfiguration des erfindungsgemäß vorgeschlagenen Verfahrens jedoch auf 4 bis 6 Minuten beschränkt sein kann. Dieser Wert ist unabhängig von der Zahl der Hierarchieebenen, die sich im Laufe der Inbetriebnahme bzw. Organisation herausbilden. Bei einer Inbetriebnahme werden nämlich zunächst die Datensammler der ersten Ebene synchronisiert, die in direktem Kontakt mit dem Master-Datensammler treten können. Die Datensammler der ersten Ebene werden nach ihrer Synchronisation und Einbindung in das Datensammlernetz, vorzugsweise jeweils nach Abschluss der ersten und der zweiten Inbetriebnahmephase, ggf. dazu aufgefordert, auf Dauer-empfang für weitere noch zu synchronisierende Datensammler zu gehen, die nicht in direktem Kontakt mit dem zentralen Datensammler synchronisiert werden konnten. Die Datensammler, deren Hilfe-Datenpakete von den Datensammlern der ersten Ebene empfangen und beantwortet werden konnten, gehören nach ihrer Synchronisation und Einbindung in das Netzwerk nun zur zweiten Hierarchieebene. Sie werden ggf. ihrerseits für zu synchronisierende Datensammler der dritten Ebene auf kurzen Dauerempfang gesetzt. So baut sich das Datensammlernetz hierarchieebenenweise auf, bis keine zu synchronisierenden Datensammler mehr übrig sind. Dabei müssen jeweils nur die Datensammler der zuletzt synchronisierten Hierarchieebene die Dauerempfangsphase durchführen, so dass sich für jeden Datensammler die Anzahl der Dauerempfangsphasen in Grenzen hält und eine übermäßige energetische Belastung der Datensammler vermieden wird.

Diese hierarchieebenenweise Inbetriebnahme bzw. Organisation des Netzwerks durch hierarchieebenenweise Synchronisierung der Netzwerkknoten bzw. Datensammler unter zentraler Kontrolle des Master-Datensammlers hat erfindungsgemäß zudem zur Folge, dass eine Inselbildung, wie sie als Nachteil beim Stand der Technik beschrieben wurde, von vornherein ausgeschlossen ist, da jeder neu zu synchronisierende Datensammler zunächst die niedrigstmögliche Hierarchieebene wählt, um in das Netzwerk eingebunden zu werden. Eine Veränderung der Hierarchieebene kann dann im Rahmen der Ermittlung der Topologie allenfalls durch den Master-Netzwerkknoten erfolgen, wobei durch diese zentrale Kontrolle auch dabei eine Inselbildung nicht auftreten kann.

Das durch das erfindungsgemäße Verfahren organisierte bzw. in Betrieb genommene Kommunikationsnetzwerk, insbesondere ein synchrones Datensammlernetzwerk, basiert also auf einer baumförmigen hierarchischen Netzwerk-Topologie, die sich bei der ersten Inbetriebnahme automatisch herausbildet. Der zentrale Master-Netzwerkknoten bzw. Master-Datensammler, der auch über ein WAN-Gateway als Schnittstelle zu einer Leitstelle bzw. Leitstellen verfügen kann, versendet regelmäßig in einem deterministischen Schema Synchronisations-Datenpakete. Das Zeit- bzw. Sendeschema kann dabei pseudostochastisch sein oder auch einen festen zeitlichen Abstand zwischen zwei Synchronisations-Datenpaketen aufweisen, wobei wichtig ist, dass mehrere benachbarte Datensammler- bzw. Netzwerkknotennetzwerke unterschiedliche Zeitschemata aufweisen, damit es bei überlappenden Funkreichweitenbereichen nicht zu dauerhaften zeitlichen Kollisionen der Aussendungen kommen kann. Typische Synchronisations-Sendeintervalle können beispielsweise etwa 15 Minuten lang sein.

Diejenigen Datensammler bzw. Netzwerkknoten, die die Synchronisations-Datenpakete des zentralen Master-Datensammlers im eingerichteten Netzwerk direkt empfangen können, korrigieren ggf. ihr eigenes Zeitschema (einschließlich der Zeitbasis) gemäß dem Empfangszeitpunkt des Synchronisations-Datenpakets und senden ihrerseits ein Synchronisations-Datenpaket aus, das wiederum zur Synchronisation weiterer Datensammler des Netzwerkes dient, die nicht in der Funkreichweite des zentralen Master-Datensammlers liegen, d.h. einer höheren Hierarchieebene angehören. Hierdurch bildet sich ein hierarchisches Datensammlernetzwerk aus, in dem alle Datensammler von jeweils einem Elternknoten in der nächstniedrigeren Hierarchieebene die Synchronisations-Datenpakete empfangen. Dieses Kommunikationsnetzwerk ist für Verbrauchserfassungsnetzwerke besonders geeignet.

Gemäß einem besonders bevorzugten Aspekt des erfindungsgemäß vorgeschlagenen Verfahrens kann das Hilfe-Sendeintervall mit dem Aussenden eines Hilfe-Datenpakets und dem anschließenden Dauer-Empfang in einem nicht synchronisierten Netzwerkknoten derart bestimmt und vorgegeben werden, dass der durchschnittliche Stromverbrauch in einer Inbetriebnahmephase mit der Aussendung von Hilfe-Sendeintervallen nicht größer ist als der durchschnittliche Stromverbrauch im Regelbetrieb eines synchronisierten Netzwerkknotens.

Dies soll nachfolgend anhand eines Beispiels erläutert werden: Wenn die Gesamt-Batterieladung eines Datensammlers beispielsweise 10Ah beträgt, so ist bei einer vorgesehenen Lebensdauer von 100.000 Stunden ein durchschnittlicher Stromverbrauch von 100µA zulässig. Bei einer Länge eines Hilfe-Datenpakets von beispielsweise 4ms und einem Sender-Stromverbrauch von 300mA und einem Empfänger-Stromverbrauch von 40mA und einer Empfangsdauer von 120ms nach jeder Aussendung ergibt sich ein Ladungsbedarf von 6mAs pro Hilfe-Sendeintervall. Damit ist in diesem Beispiel ein Hilfe-Sendeintervall von bis runter zu 60 Sekunden möglich, ohne dass die zulässige durchschnittliche Stromaufnahme von 100µA überschritten wird. Ein Datensammler kann bei dieser Dimension also beliebig lange im zu synchronisierenden Zustand bleiben, ohne dass seine technische Lebensdauer dadurch gegenüber dem Regelbetrieb eingeschränkt wird. Das bedeutet wiederum, dass es keine Einschränkung bezüglich der Häufigkeit der Re-Synchronisation während des laufenden Betriebs gibt.

Daher ist es erfindungsgemäß möglich, das Aussenden von Hilfe-Datenpaketen nach einer Installation des Datensammlers bzw. des Netzwerkknotens in dem Gebäude, d.h. solange der Netzwerkknoten noch nicht synchronisiert ist, zu aktivieren, oder auch wenn ein synchronisierter Netzwerkknoten aus einem synchronen Zustand in einen nicht synchronen Zustand wechselt, beispielsweise weil ein synchronisierter Netzwerkknoten keine Synchronisations-Datenpakete mehr empfängt und daher nicht mehr synchronisiert ist.

Insbesondere um eine gezielte Synchronisation durch den Master-Netzwercknoten veranlassen zu können, kann in einer besonderen Ausgestaltung des erfindungsgemäß vorgeschlagenen Verfahrens vorgesehen sein, dass der Master-Netzwerkknoten eine Liste mit in Betrieb zu nehmenden und/oder an den Netzwerk teilnehmenden Netzwerkknoten erhält, wobei die Liste vorzugsweise eine Identifikation, beispielsweise eine Identifikationsnummer oder sonstige Kennung, der Netzwerkknoten enthält. Diese Liste kann der Master-Netzwerkknoten über eine WAN-Schnittstelle bspw. von einer Leitstelle oder eine lokale Serviceschnittstelle übermittelt bekommen.

Über diese Schnittstelle kann der Master-Netzwerkknoten ggf. zusätzlich einen separaten Befehl zur Inbetriebnahme erhalten, damit der Master-Netzwerkknoten dann in dem Hilfe-Empfangsintervall auf Dauerempfang schaltet und/oder für alle oder ausgewählte der bereits synchronisierten Netzwercknoten einen Befehl zum Dauerempfang für ein Hilfe-Empfangsintervall gibt. Alternativ oder zusätzlich kann der Master-Datensammler die empfangenen Daten auch daraufhin auswerten, ob alle teilnehmenden Netzwerkknoten respektive Datensammler im Rahmen eines Regelbetriebs an der Kommunikation teilnehmen, d.h. eine Auswertung der von den synchronisierten Netzwerkknoten an den Master-Netzwerkknoten üblicherweise übermittelten Daten vornehmen. Diese Daten können dem Master-Netzwerkknoten vorgegeben und/oder von diesem im laufenden Betrieb selbständig ermittelt bzw. aktualisiert werden. Nur dann schaltet der Master-Netzwerkknoten auf Dauerempfang bzw. sorgt dafür, dass die synchronisierten Netzwerkknoten auf Dauerempfang schalten. Durch diesen gezielten Dauerempfang in einem Hilfe-Empfangsintervall lässt sich eine besonders effektive gezielte Inbetriebnahme bzw. Synchronisation bei nur einer kurzen Zeit des dafür notwendigen Dauerempfangs erreichen. Dies ist besonders energiesparend, insbesondere wenn standardmäßig keine periodische Wiederholung des Dauerempfangs in Hilfe-Empfangsintervallen stattfindet, solange dies nicht nötig ist, weil alle Netzwerkknoten bzw. Datensammler synchronisiert sind.

In Weiterentwicklung dieses Erfindungsgedankens kann ferner vorgesehen sein, dass der Master-Netzwerkknoten (respektive der Master-Datensammler) den üblichen bzw. vorgesehenen Empfang einzelner Netzwerkknoten prüft und überwacht und bei Fehlen eine Inbetriebnahme zumindest für diesen fehlenden Netzwerkknoten, d.h. dessen Re-Synchronisierung, neu startet. Hierdurch können die Ausfallzeiten einzelner Datensammler besonders kurz gehalten werden.

Für eine einfache Organisation und Inbetriebnahme ist es besonders sinnvoll, wenn der Master-Netzwerkknoten allen in das Netzwerk zu integrierenden Netzwerkknoten eine eindeutige Knotennummer zuweist. Dies kann vorzugsweise derart erfolgen, dass zu Beginn einer Inbetriebnahme, d.h. vorzugsweise nach dem Empfang einer Liste mit den in Betrieb zu nehmenden und/oder an dem Netzwerk teilnehmenden Netzwerkknoten, durch den Master-Netzwerkknoten den Netzwerkknoten zumindest vorläufige, in dem Netzwerk jeweils eindeutige Knotennummern zugewiesen werden, die dann den jeweiligen Netzwerkknoten in dem Antwort-Datenpaket auf das Hilfe-Datenpaket übermittelt werden können. Diese Knotennummern dienen dann als eindeutige Adresse der Netzwerkknoten in dem Netzwerk, wobei die Knotennummern vorzugsweise derart organisiert werden können, dass Knoten einer höheren Hierarchieebene auch eine höhere Knotennummer aufweisen. Dies vereinfacht die programmtechnische Gestaltung und Organisation des hierarchischen Netzwerks erheblich.

Die Knotennummern sind dann vorzugsweise von der Identifikation der Netzwerkknoten, insbesondere der Identifikationsnummer oder sonstigen Identifikationskennung, verschieden und werden in dem Netzwerk zusätzlich vorgesehen. Funktechnisch ist mit diesen Knotennummern eine einfache Organisation der Hierarchieebenen des Netzwerks möglich. Die Knotennummern können insbesondere auch zur Festlegung des Zeitpunkts, zu dem der Netzwerkknoten entsprechend dem Zeitschema kommunizieren darf, d.h. für das Festlegen der Sende- und/oder Empfangszeitschlitze, verwendet werden. Die in der ersten Inbetriebnahmephase ggf. noch vorläufig vergebenen Knotennummern werden dann in der zweiten Inbetriebnahmephase in Kenntnis insbesondere der Empfangsfeldstärken bei der endgültigen Ermittlung der Topologie des Netzwerkes als endgültige Knotennummern zugewiesen, wobei dies bei der Inbetriebnahme über mehrere Hierarchieebenen ggf. auch mehrfach erfolgen kann, bis die Inbetriebnahme endgültig durch die letzte zweite Inbetriebnahmephase abgeschlossen ist.

Um einen Empfang von Hilfe-Datenpaketen trotz möglicher zufälliger Kollisionen zu ermöglichen, kann es erfindungsgemäß besonders vorteilhaft sein, wenn ein Hilfe-Empfangsintervall, in dem der Master-Netzwerkknoten und/oder bereits synchronisierte Netzwerkknoten auf Dauerempfang gehen, mehrere Hilfe-Sendeintervalle umfasst, vorzugsweise etwa vier bis sechs Sendeintervalle, so dass in einem Hilfe-Empfangsintervall vier- bis sechsmal die Möglichkeit besteht, dass ein ausgesendetes Hilfe-Datenpaket empfangen wird.

Das Verfahren zur Organisation und Inbetriebnahme mit dem ersten und ggf. dem zweiten Inbetriebnahmeintervall wird erfindungsgemäß so lange ausgeführt, bis alle zu synchronisierenden Netzwerkknoten respektive Datensammler integriert sind oder über eine vorgegebene Anzahl von Hilfe-Empfangsintervallen, beispielsweise ein bis fünf Hilfe-Empfangsintervalle, kein weiteres Hilfe-Datenpaket durch in dem Netzwerk bereits synchronisierte Netzwerkknoten, d.h. den Master-Netzwerkknoten bzw. normale, bereits in dem Netzwerk synchronisierte Netzwerkknoten, empfangen wird. Wenn nicht alle zu synchronisierenden Netzwerkknoten tatsächlich synchronisiert wurden, deutet dies auf einen Fehler entweder in der Anordnung des noch nicht zu synchronisierten Netzwerkknotens oder einen Fehler des Netzwerkknotens selbst hin. In diesem Fall kann durch den Master-Netzwerkknoten ggf. eine Fehlermeldung ausgegeben werden, beispielsweise über die bereits erwähnte WAN-Schnittstelle oder eine lokale Schnittstelle.

Um die Synchronisation eines einzelnen Netzwerkknotens in dem Netzwerk zu stabilisieren und zu verbessern, kann erfindungsgemäß vorgesehen sein, dass jeder Netzwerkknoten bei seiner Synchronisierung nach Erhalt der Synchronisationsinformation in einem Hilfe-Datenpaket für das nächste und mindestens ein weiteres der regelmäßig folgenden Synchronisations-Datenpakete, vorzugsweise das dann unmittelbar folgende Datenpaket, auf Empfang schaltet und den zeitlichen Abstand des nächsten und des mindestens einen weiteren Synchronisations-Datenpakets beispielsweise durch Speichern der Empfangszeitpunkte und Differenzbildung auf Basis der internen Uhr des Netzwerkknotens bildet und mit dem entsprechend dem Zeitschema vorgesehenen Abstand der Synchronisations-Datenpakete vergleicht. Auf diese Weise kann der Netzwerkknoten eine Korrektur für seine interne Uhr bezogen auf den den zeitlichen Abstand der Synchronisations-Datenpakete bestimmenden Netzwerkknoten, insbesondere also den Master-Netzwerkknoten, ermitteln und bei den nächsten Empfangszeitfenstern berücksichtigen. Hierdurch wird erreicht, dass sich die Uhren eines Netzwerks der Uhr des den Synchronisationstakt vorgebenden Master-Netzwerkknotens anpassen. Die interne Uhr wird durch einen Uhrentaktoszillator gebildet, der sowohl fertigungstechnische Abweichungen hat als auch je nach Betriebstemperatur unterschiedliche Taktfrequenzen aufweisen kann. Daher ist es sinnvoll, vorgeschriebene Synchronisationsverfahren auch im laufenden Betrieb mehrfach periodisch durchzuführen.

Unter Anwendung vieler der vorbeschriebenen vorteilhaften Ausgestaltungen des erfindungsgemäßen Verfahrens können bei der Synchronisation eines Netzwerkknotens, d.h. bei der Inbetriebnahme bzw. Organisation des Netzwerkes, den Netzwerkknoten während der Inbetriebnahme und/oder des Betriebs des Netzwerks die folgenden Zustände zugewiesen werden:
Zustand 1: asynchron, im Netzwerk unkonfiguriert
   Dieser Zustand liegt vor, wenn der Netzwerkknoten keine gültigen Synchronisationsinformationen aufweist, insbesondere unmittelbar nach der Installation und dem Einschalten eines Netzwerkknotens.
Zustand 2: grob synchron, vorläufig konfiguriert
   Dieser Zustand liegt nach Empfang einer Synchronisationsinformation vor, die den Zeitpunkt des nächsten Synchronisations-Datenpakets und eine vorläufige Knotennummer im Netzwerk enthält, so dass der Netzwerkknoten im Netzwerk vorläufig konfiguriert ist und als grob synchroner Netzwerkknoten zumindest das nächste Synchronisations-Datenpaket empfangen kann.
Zustand 3: synchron, vorläufig konfiguriert
   Nach dem Empfang mindestens zweier regelmäßiger Synchronisations-Datenpakete hat der Netzwerkknoten seine interne Uhr an die Uhr des Master-Datensammlers angepasst. In diesem Zustand ist der Netzwercknoten mit dem Netzwerk voll synchron. Die vorläufige Konfiguration in dem Netzwerk bezieht sich darauf, dass der Netzwerkknoten noch eine vorläufige Knotennummer aufweist.
Zustand 4: synchron, konfiguriert
   Nach Durchlaufen der zweiten Inbetriebnahmephase ordnet der Master-Netzwerkknoten unter Verwendung insbesondere auch der Empfangsfeldstärken die Topologie des Netzwerkes neu und weist den Netzwerkknoten endgültige Knotennummern zu, die entsprechend dem hierarchischen Aufbau des Netzwerkes gewählt werden. Nach Erhalt dieser endgültigen Knotennummern, beispielsweise im Rahmen eines Organisations-Datenpakets, ist der Netzwerkknoten in dem Netzwerk auch vollständig konfiguriert.

Vorzugsweise durchläuft ein Netzwerkknoten bei der Synchronisation bzw. Inbetriebnahme schrittweise die vorstehenden Zustände, wobei er bei einem fehlerfrei arbeitenden Verfahren nach Durchlaufen eines weiteren Inbetriebnahmeschrittes jeweils den nächsten Zustand erreicht.

Wie bereits erwähnt, ist zur Vermeidung einer Inselbildung bei der Inbetriebnahme des Netzwerks vorgesehen, dass die Synchronisation nicht synchronisierter Netzwerkknoten vorzugsweise zumindest bei einer ersten Inbetriebnahme des Systems ausgehend von dem Master-Netzwerkknoten, der den Netzwerkknoten der niedrigsten Hierarchieebene bildet, hierarchieebenenweise erfolgt derart, dass zuerst in einem ersten Synchronisationsdurchgang der Master-Netzwerkknoten für ein Hilfe-Empfangsintervall auf Dauerempfang schaltet und Antwort-Datenpakete für die empfangenen Hilfe-Datenpakete aussendet und nachfolgend jeweils bereits synchronisierte Netzwerkknoten der jeweils nächsthöheren Hierarchieebene für ein Hilfe-Empfangsintervall auf Dauerempfang schalten und Antwort-Datenpakete für die empfangenen Hilfe-Datenpakete aussenden, wobei die durch Netzwerkknoten einer Hierarchieebene synchronisierten Netzwerkknoten den Netzwerkknoten der nächst höheren Hierarchieebene zugewiesen werden, bis alle zu synchronisierenden Netzwerkknoten synchronisiert sind oder über eine vorgebbare Anzahl von Hilfe-Empfangsintervallen, beispielsweise ein bis fünf Hilfe-Empfangsintervalle, kein weiteres Hilfe-Datenpaket durch in dem Netzwerk bereits synchronisierte Netzwerkknoten, d.h. den Master-Netzwerkknoten bzw. normale, bereits synchronisierte Netzwerkknoten, empfangen werden. Erfindungsgemäß werden bei dieser Variante also nur die in einem letzten Inbetriebnahmelauf synchronisierten Datensammler, die - zumindest vor einer Neuordnung der Topologie des Netzwerks - einer Hierarchieebene angehören, auf Dauerempfang schalten. Hierdurch wird die bereits beschriebene Inselbildung zuverlässig vermieden.

Gemäß einer weiteren Variante des zuvor beschriebenen Verfahrens kann vorgesehen sein, dass nach jeder hierarchieebenenweisen Synchronisation der Master-Netzwerkknoten ein Anforderungs-Datenpaket an alle bereits synchronisierten Netzwerkknoten aussendet und diese dadurch veranlasst werden, zu den ihnen zugewiesenen Zeitpunkten, d.h. in den Sendezeitschlitzen, ein oder mehrere vorzugsweise definierte Datenpakete auszusenden und in allen Empfangszeitschlitzen die Datenpakete anderer Netzwerkknoten zu empfangen. Bei dem Empfang wird, soweit dies möglich ist, die Empfangsfeldstärke gemessen und beispielsweise in einer anschließenden Kommunikation, an den zentralen Master-Netzwerkknoten übertragen. Unter Verwendung zumindest auch dieser Empfangsfeldstärken ermittelt der Master-Netzwerkknoten dann eine vorteilhafte Netzwerktopologie und teilt den Netzwerkknoten diese vorteilhafte Netzwerktopologie in einem Organisations-Datenpaket mit. Durch das Ermitteln der vorteilhaften Netzwerktopologie jeweils nach der Synchronisation einer weiteren Hierarchieebene des Netzwerks wird bereits bei der ersten Inbetriebnahme eine näherungsweise optimale Hierarchie ermittelt. Dies beschleunigt die Inbetriebnahme deutlich.

In Erweiterung des bisher beschriebenen Organisations- und Inbetriebnahmeverfahrens kann ferner vorgesehen sein, dass ein synchronisierter Netzwercknoten nach Verpassen eines ersten regelmäßigen Synchronisations-Datenpakets einen Zähler über den Nicht-Empfang von nachfolgenden regelmäßigen Synchronisations-Datenpaketen startet und nach einem nachfolgenden Empfang eines regelmäßigen Synchronisations-Datenpakets den Zähler wieder zurücksetzt. Dieser Zustand, in welchem der synchronisierte Netzwerkknoten nach Verpassen eines regelmäßigen Synchronisations-Datenpakets die aufeinanderfolgend verpassten regelmäßigen Synchronisations-Datenpakete zählt, kann als Zustand 5 (grob synchron, konfiguriert) beschrieben werden.

In diesem Zustand 5 kann vorgesehen sein, dass der synchronisierte Netzwercknoten bei Erreichen eines vorgegebenen Zählerschwellenwerts des Zählers über den Nicht-Empfang nachfolgender regelmäßiger Synchronisations-Datenpakete in den Zustand eines nicht synchronisierten, d.h. asynchronen Netzwerkknotens wechselt, in dem der dann asynchrone Netzwerkknoten wieder Hilfe-Datenpakete in den vorgegebenen Hilfe-Sendeintervallen aussendet, um sich ggf. auf diesem Weg zu re-synchronisieren. Dieser Zustand entspricht dem zuvor beschriebenen Zustand 1. Hierdurch wird erreicht, dass der Netzwerkknoten bei einer nicht nur zufälligen, sondern systematischen Änderung des Netzwerks oder eines sonstigen Fehlers nicht dauerhaft in einem asynchronen Zustand verbleibt.

Die Erfindung betrifft auch einen Netzwerkknoten für die Integration in einem Netzwerk zur Kommunikation, insbesondere in ein Funknetzwerk zur drahtlosen Verbrauchsdatenerfassung, mit einer Sende- und Empfangseinrichtung, insbesondere einem Funksender und einem Funkempfänger, welche zur bidirektionalen synchronisierten Datenübertragung mit anderen Netzwerkknoten nach einem Zeitschema eingerichtet sind, in welchem Zeitschema festgelegt ist, zu welchen Zeitpunkten im Sinne von Zeitintervallen bzw. Zeitschlitzen eine Datenübertragung zwischen welchen Netzwerkknoten in welcher Übertragungsrichtung erfolgen kann. Der Netzwerkknoten ist ferner mit einer Recheneinheit und mit einer insbesondere durch eine Batterie oder einen Akkumulator gebildete Energieversorgung ausgestattet.

Der erfindungsgemäß vorgeschlagene Netzwerkknoten zeichnet sich ferner dadurch aus, dass die Recheneinheit des Netzwerkknotens dazu eingerichtet ist, in einem nicht synchronisierten, d.h. asynchronen Zustand, des Netzwercknotens in dem Netzwerk Hilfe-Datenpakete in vorgegebenen Hilfe-Sendeintervallen auszusenden und im Anschluss an das Aussenden eines Hilfe-Datenpakets für ein Antwort-Empfangsintervall auf Dauerempfang zu schalten. Ferner ist die Recheneinheit des Netzwerkknotens dazu eingerichtet, ein empfangenes Antwort-Datenpaket mit einer Synchronisationsinformation auszuwerten, nach Auswertung der Synchronisationsinformation ein Synchronisations-Datenpaket zu empfangen und nach Empfang eines Anforderungs-Datenpakets zu dem dem Netzwerkknoten zugewiesenen Zeitpunkt Datenpakete auszusenden und zu allen Empfangszeitpunkten, d.h. in allen Empfangszeitschlitzen, auf Empfang zu schalten, die Empfangsfeldstärke zu messen und in einem vorgesehenen Datenpaket, insbesondere an den zentralen Master-Netzwerkknoten, zu übertragen. Ferner ist die Recheneinheit dazu eingerichtet, ein Organisations-Datenpaket mit der Netzwerktopologie zu empfangen und auszuwerten.

In entsprechender Weise bezieht sich die Erfindung auch auf einen Master-Netzwerkknoten für die Integration in ein Netzwerk zur Kommunikation, insbesondere in ein Funknetzwerk zur drahtlosen Verbrauchsdatenerfassung, mit einer Sende- und Empfangseinrichtung, insbesondere einem Funksender und einem Funkempfänger, welche zur bidirektionalen synchronisierten Datenübertragung mit anderen Netzwerkknoten nach einem Zeitschema eingerichtet sind, in welchem Zeitschema festgelegt ist, zu welchen Zeitpunkten im Sinne von Zeitintervallen bzw. Zeitschlitzen eine Datenübertragung zwischen welchen Netzwerkknoten in welcher Übertragungsrichtung erfolgen kann, mit einer Recheneinheit und mit einer insbesondere durch eine Batterie, einen Akkumulator oder einen Stromanschluss gebildete Energieversorgung und mit einer insbesondere als WAN-Anschluss ausgebildeten Inbetriebnahmeschnittstelle.

Der erfindungsgemäße Master-Netzwerkknoten zeichnet sich dadurch aus, dass die Recheneinheit des Master-Netzwerkknotens dazu eingerichtet ist, zur Synchronisation mindestens eines nicht synchronisierten Netzwerkknotens für ein Hilfe-Empfangsintervall auf Dauerempfang zu schalten und nach Empfang eines Hilfe-Datenpakets unmittelbar ein Antwort-Datenpaket an den nicht synchronisierten Netzwerkknoten auszusenden, welches eine Synchronisationsinformation enthält. Ferner ist die Recheneinheit dazu eingerichtet, nach der Synchronisation eines oder mehrerer Netzwerkknoten in der ersten Inbetriebnahmephase und/oder in konfigurierbaren Zeitabständen in einer zweiten Inbetriebnahmephase ein Anforderungs-Datenpaket an alle synchronisierten Netzwerkknoten auszusenden, wobei die synchronisierten Netzwerkknoten und der Master-Netzwerkknoten veranlasst werden, zu den ihnen zugewiesenen Zeitpunkten, d.h. in den ihnen zugewiesenen Sendezeitschlitzen, ein oder mehrere vorzugsweise vordefinierte Datenpakete auszusenden und zu allen Empfangszeitpunkten, d.h. in allen Empfangszeitschlitzen, die Datenpakete anderer Netzwerkknoten zu empfangen, wobei die Empfangsfeldstärke erfasst wird. Im Falle des Master-Netzwerkknotens ermittelt dieser die Empfangsfeldstärke selbst und stellt sie für die nachfolgende Weiterverarbeitung zur Verfügung. In anderen Fällen empfängt der Master-Netzwerkknoten die Empfangsfeldstärken über eine im Rahmen dieses Netzwerks stattfindende Kommunikation von den anderen Netzwerkknoten. Schließlich ermittelt der Master-Netzwerkknoten unter Verwendung der Empfangsfeldstärken eine vorteilhafte Netzwerktopologie und teilt diese den anderen Netzwerkknoten in einem Organisations-Datenpaket mit.

Ferner können die Recheneinheit des Netzwerkknotens und/oder des Master-Netzwerkknotens zur Durchführung des vorbeschriebenen Verfahrens oder Teilen hiervon eingerichtet sein, so dass das gesamte vorbeschriebene Verfahren, insbesondere im Zusammenwirken von Netzwerkknoten und Master-Netzwerkknoten, durchführbar ist.

Ferner bezieht sich die Erfindung auf die Verwendung eines vorbeschriebenen Master-Netzwerkknotens und mindestens eines vorbeschriebenen Netzwerkknotens zum Aufbau eines Netzwerks zur Kommunikation, insbesondere eines Datenerfassungsnetzwerkes, das gemäß dem vorbeschriebenen Verfahren organisiert und/oder in Betrieb genommen wird.

Weitere Vorteile, Merkmale und Anwendungsmöglichkeiten der Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: ein Ablaufdiagramm mit den Zuständen und Zustandswechseln eines gemäß dem erfindungsgemäßen Verfahren in Betrieb genommenen Netzwerkknotens respektive Datensammlers;
- Fig. 2: ein erfindungsgemäßes Netzwerk mit Netzwerkknoten respektive Datensammlern in einem ersten Zustand während des erfindungsgemäßen Verfahrens;
- Fig. 3: das Netzwerk gemäß Fig. 2 in einem zweiten Zustand des erfindungsgemäßen Verfahrens;
- Fig. 4: das Netzwerk gemäß Fig. 2 in einem dritten Zustand des erfindungsgemäßen Verfahrens;
- Fig. 5: das Netzwerk gemäß Fig. 2 in einem vierten Zustand des erfindungsgemäßen Verfahrens; und
- Fig. 6: das Netzwerk gemäß Fig. 2 in einem fünften Zustand des erfindungs-gemäßen Verfahrens.

Nachfolgend wird der Ablauf des erfindungsgemäßen Verfahrens zur Inbetriebnahme bzw. Organisation eines aus Netzwerkknoten aufgebauten Netzwerkes anhand der Zeichnungen beschrieben. Dabei wird davon ausgegangen, dass die das Netzwerk bildenden Netzwerkknoten als Datensammler ausgebildet sind, die Teil eines Datenerfassungsnetzwerkes sind und von Messgeräten über die Datensammler zu einem Master-Datensammler weitergeleitete Verbrauchserfassungswerte übertragen.

Diese Anwendung ist ein besonders bevorzugtes Ausführungsbeispiel des erfindungsgemäß vorgeschlagenen Verfahrens zur Organisation und/oder Inbetriebnahme eines Netzwerkes zur Kommunikation bzw. Übertragung von Verbrauchsdaten.

Nachfolgend wird daher, wie auch bereits vorstehend, von Datensammlern im Sinne von Netzwerkknoten gesprochen. Hierbei ist zu berücksichtigen, dass nicht jeder der erwähnten "Datensammler" ein Datensammler in dem Sinne sein muss, dass er Verbrauchserfassungswerte von einem Messgerät erhält und diese an eine zentrale Stelle, einen Master-Datensammler, weiterleitet, sondern dass unter einem Datensammler auch ein beliebiger Netzwerkknoten verstanden werden kann, der entsprechend dem beschriebenen Verfahren in Betrieb genommen wird. Das nachfolgend auch als Datensammlernetzwerk beschriebene Netzwerk kann insbesondere neben einer Vielzahl von Datensammlern auch Netzwerkknoten enthalten, die lediglich eine Weiterleitungsfunktion wahrnehmen und in diesem Sinne kein "Sammeln von Daten" durchführen. Gleichwohl wird der Übersichtlichkeit halber jeder dieser Netzwerkknoten nachfolgend als Datensammler bezeichnet.

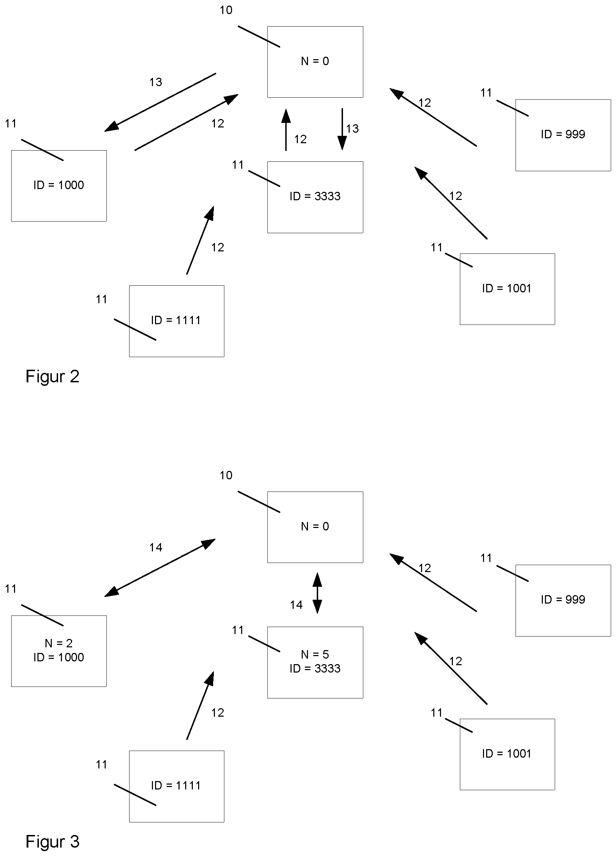

Ein erfindungsgemäßes Netzwerk zur Kommunikation weist einen zentralen Master-Datensammler 10 auf, der in Fig. 2 zentral oben dargestellt ist. Der Master-Datensammler 10 ist der zentrale Zeitgeber des Netzwerks und initiiert die Inbetriebnahme der in das Netzwerk zu integrierenden Datensammler 11, die in Fig. 2 verteilt um den Master-Datensammler 10 angeordnet dargestellt sind.

Bei einer ersten Inbetriebnahme des Netzwerks ist noch keiner der Datensammler 11 mit dem Master-Datensammler 10 zu einem synchronen Netzwerk verbunden. Alle Datensammler 10, die in das Netzwerk eingebunden werden sollen, sind aber an ihren vorgesehenen Standorten montiert und eingeschaltet. Dies ist der Ausgangszustand bei der ersten Inbetriebnahme eines Netzes. Analoges gilt für den Fall, dass in ein bestehendes Netz später noch weitere Datensammler 11 integriert werden sollen oder Datensammler 11 ihre Synchronisation zu dem Netzwerk verloren haben.

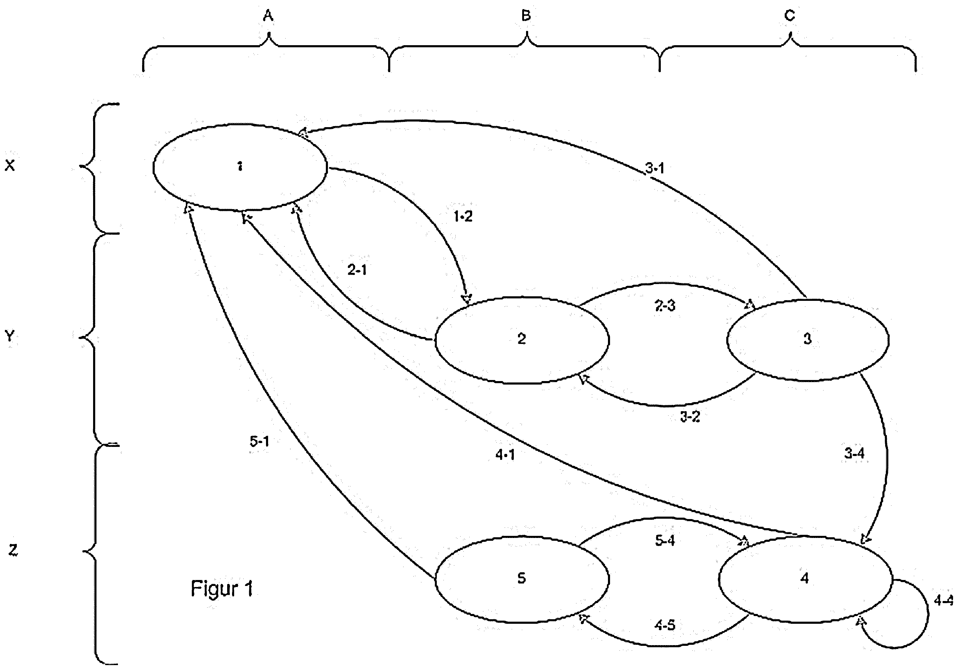

Als zentrale Kontrollinstanz des Netzwerks befindet sich der Master-Datensammler 10 per Definition immer in einem (zu sich selbst) synchronen, im Netzwerk konfigurierten Zustand. Dieser Zustand ist in Fig. 1 als Zustand 4 in Form einer Ellipse dargestellt, wobei die horizontal angeordneten Klammern A, B, C in Fig. 1 die Synchronität eines Datensammlers 10, 11 und die vertikal angeordneten Klammern X, Y und Z in Fig. 1 die Konfiguration des Datensammlers 10, 11 im Netzwerk beschreiben.

Der Zustand 4 ist entsprechend der Darstellung charakterisiert durch einen synchronen (C) Datensammler 10, 11, der in dem Netzwerk konfiguriert (Z) ist. Dies gilt in dem eben beschriebenen Zustand nur für den Master-Datensammler 10.

Alle übrigen Datensammler 11 befinden sich in einem Zustand 1 (Ellipse 1), in dem sie sich zu dem Master-Datensammler 10 asynchron (A) verhalten und im Netzwerk unkonfiguriert (X) sind. In diesem Zustand 1, der in Fig. 1 oben links dargestellt ist, senden die Datensammler 11 Hilfe-Datenpakete in vorgegebenen Hilfe-Sendeintervallen aus, die eine eindeutige Identifikationsnummer ID des Datensammlers 11 enthalten. Die eindeutige Identifikationsnummer ID kann z.B. aus einer Hard- und Software-Kennung und der Seriennummer des Datensammlers 11 bestehen. In dem hier dargestellten Ausführungsbeispiel ist die Identifikationsnummer ID einfach eine ein- bis vierstellige Zahl.

Zur Einleitung des erfindungsgemäßen Verfahrens zur Inbetriebnahme des Netzwerks erhält der Master-Datensammler 10 eine Liste mit den Identifikationsnummern ID der in Betrieb zu nehmenden Datensammler 11 sowie ggf. zu einem späteren Zeitpunkt separat das Kommando, mit der Inbetriebnahme des Netzwerks zu beginnen. Die Liste kann der Master-Datensammler 10 beispielsweise über ein WAN-Gateway (Wide Area Network) als Schnittstelle von einer Leitstelle erhalten, an die der Master-Datensammler 10 später auch die im Betrieb gesammelten Verbrauchswerte zur weiteren Abrechnung weiterleitet. Das WAN-Gateway kann beispielsweise eine Internet- oder Mobilfunkverbindung sein. Alternativ kann der Master-Datensammler 10 die Liste der in Betrieb zu nehmenden Datensammler 11 auch über eine lokale Serviceschnittstelle erhalten. Vorzugsweise enthält die Liste für jeden Datensammler 11 dessen eindeutige Identifikationsnummer ID.

Zu Beginn der ersten Inbetriebnahmephase ordnet jetzt der zentrale Master-Datensammler 10 allen zu synchronisierenden Datensammlern 11 aus der Liste eine vorläufige, für das Netzwerk eindeutige Knotennummer N zu, die in dem synchronisierten Zeitschema des Netzwerks Sende- und Empfangszeitschlitze des jeweiligen Datensammlers 11 definiert, in denen er mit anderen Datensammlern 10, 11 kommuniziert. Als zentrale Kontrollinstanz (niedrigste Hierarchieebene) erhält der Master-Datensammler 10 immer die Knotennummer N = 0.

Anschließend geht der Master-Datensammler 10 zur Synchronisation eines oder mehrerer nicht synchronisierter Datensammler 11 für ein Hilfe-Empfangsintervall auf Dauerempfang, um die von den eingeschalteten Datensammlern 11 im asynchronen Zustand A ausgesendeten Hilfe-Datenpakete zu empfangen. Das Hilfe-Empfangsintervall entspricht einer Länge von vier bis sechs Hilfe-Sendeintervallen.

Jedes empfangene Hilfe-Datenpaket beantwortet der zentrale Master-Datensammler 10 umgehend, d.h. noch während des in dem Datensammler 11 nach Aussenden eines Hilfe-Datenpakets geöffneten Antwort-Empfangsintervalls, in welchem der Datensammler 11 auf Empfang geschaltet ist, mit einem als Hilfe-Antwort zu verstehenden Antwort-Datenpaket, das zwecks Ausschluss von Verwechslungen die eindeutige Identifikationsnummer ID des "hilferufenden" Datensammlers 11 wiederholt und die Knotennummer N des antwortenden Datensammlers 10, 11, hier des Master-Datensammlers 10, enthält. Ferner ist in dem Antwort-Datenpaket die von dem Master-Datensammler 10 dem Datensammler 11 mit der ID zugewiesene vorläufige Knotennummer N für den zu synchronisierenden Datensammler 11 und die Zeitdauer bis zum Aussendezeitpunkt des nächsten Synchronisations-Datenpaketes enthalten.

Nach Auswerten dieser Synchronisationsinformation hat damit ein zu synchronisierender Datensammler 11 eine erste Information über das synchrone Zeitschema, das von dem zentralen Master-Datensammler 10 vorgegeben wird, einschließlich dessen Zeitbasis. Durch den Empfang der Synchronisationsinformation wechselt der zu synchronisierende Datensammler 11 aus dem Zustand 1 (asynchron A, unkonfiguriert X) in den Zustand 2 (grob synchron B, vorläufig konfiguriert Y).

In dem Zustand 2 geht der in das Netzwerk zu integrierende, d.h. zu synchronisierende Datensammler 11 für das nächste Synchronisierungs-Datenpaket gezielt auf Empfang und merkt sich den Empfangszeitpunkt entsprechend seiner eigenen internen Uhr.

Da die internen Uhren der verschiedenen Datensammler 10, 11 aufgrund von Fertigungstoleranzen oder unterschiedlichen Betriebstemperaturen Gangabweichungen aufweisen können, ist für eine präzise, vollständige Synchronisierung eines Datensammlers 11 der Empfang eines weiteren regelmäßigen Synchronisierungs-Datenpakets sinnvoll bzw. vorteilhaft. Durch Messung des zeitlichen Abstands dieser beiden vorzugsweise unmittelbar aufeinanderfolgenden regelmäßigen Synchronisierungs-Datenpakete kann der neue (zu synchronisierende) Datensammler 11 die Frequenzabweichung seines als interne Uhr dienenden Uhrentaktoszillators zu dem Uhrentaktoszillator des zentralen Master-Datensammlers 10 exakt bestimmen. Da der Master-Datensammler mit seinem Uhrentaktoszillator die Systemzeit des Netzwerks vorgibt, berücksichtigt der neue, zu synchronisierende Datensammler 11 bei der Bestimmung des oder der nächsten Empfangs- oder Sendezeitfenster den Unterschied der internen Uhren. Nach dem Empfang zweier definiert aufeinanderfolgender Synchronisations-Datenpakete geht der neue (zu synchronisierende) Datensammler 11 in den Zustand 3 (synchron C, vorläufig konfiguriert Y) über.

Diese Übergänge sind in Fig. 1 durch teilkreisförmig gebogene Pfeile angedeutet, an denen - durch einen Bindestrich getrennt - zwei Ziffern stehen, wobei als erste Ziffer der Ausgangszustand und als letzte Ziffer der Endzustand des Datensammlers 11 angegeben ist.

Sollte beispielsweise nach einer vorgegebenen Zeit ein Wechsel von dem Zustand 2 zu dem Zustand 3 bzw. von dem Zustand 3 zu dem Zustand 4 nicht möglich sein, wechselt der Datensammler wieder in den jeweils vorherigen Zustand zurück, wie durch die entsprechenden Gegenpfeile dargestellt, um den Synchronisierungsprozess bzw. die Inbetriebnahme in dem zuletzt erfolgreich durchgeführten Zustand wieder aufzunehmen.

Schlimmstenfalls fällt der Datensammler 11 in den Zustand 1 zurück, in dem er wieder die Hilfe-Datenpakete aussendet.

In dem Zustand 3 ist der Datensammler 11 jetzt für Kommandos und Daten durch den zentralen Master-Datensammler 10 erreichbar, jedoch wegen der vorläufig an ihn vergebenen Knotennummer N noch nicht optimal in die Netzwerk-Topologie eingebunden. Je nach Ausgestaltung des Kommunikationsverfahrens kann es auch sein, dass vorläufig konfigurierte Datensammler nur Kommandos entgegennehmen können, aber Datenabfragen durch den zentralen Master-Datensammler 10 noch nicht bedient werden können. Das hier beschriebene Verfahren funktioniert ggf. auch mit dieser Einschränkung.

In einer sich nun anschließenden zweiten Inbetriebnahmephase werden alle erreichbaren Datensammler 11, also diejenigen Datensammler 11, die sich mindestens im Zustand 3 befinden, von dem zentralen Master-Datensammler 10 dazu veranlasst, in ihren jeweiligen Zeitschlitzen entsprechend dem synchronen Zeitschema des Netzwerkes ein oder mehrere Datenpakete auszusenden. Auch der zentrale Master-Datensammler 10 sendet in seinem Zeitschlitz bzw. seinen Zeitschlitzen entsprechende Datenpakete aus. Alle Datensammler 10, 11, also auch der Master-Datensammler 10, gehen in den Zeitschlitzen alle anderen Datensammler 10, 11, in denen diese die Datenpakete aussenden, auf Empfang und messen die Empfangsfeldstärke. Anschließend fragt der zentrale Master-Datensammler die Messergebnisse ab oder erhält diese automatisch übermittelt. So erhält er eine vollständige Matrix darüber, welcher Datensammler 10, 11 im Netzwerk welchen anderen Datensammler 11 mit welcher Empfangsstärke empfangen kann.

Falls die Kommunikationsverfahren im Datensammlernetzwerk eine Abfrage der Empfangsfeldstärke-Messergebnisse von den vorläufige konfigurierten Datensammlern nicht zulassen, kann entsprechend nur eine halbe Feldstärke-Matrix aufgebaut werden, die nur die Werte enthält, wie stark der zentrale Master-Datensammler 10 bzw. die bereits vollständig synchronen und konfigurierten Datensammler 11 im Zustand 4, sofern solche bereits vorhanden sind, die anderen Datensammler 11 empfangen. Die bidirektionalen Funkstrecken im Netzwerk können jedoch üblicherweise als symmetrisch angenommen werden, wenn alle Datensammler 11 mit einer gleichartigen Funk-Schnittstelle, d.h. gleichen Funksendern und -empfängern, ausgestattet sind, d.h. etwa die gleiche Sendeleistung und Empfangsempfindlichkeit haben. So kann der zentrale Master-Datensammler 10 in diesem Fall annehmen, dass ein beliebiger anderer Datensammler 11 ihn so stark empfängt wie der zentrale Master-Datensammler 10 diesen anderen Datensammler 11 empfängt. Eine entsprechende Annahme gilt zwischen Datensammlern 11 in den Zuständen 3 und 4.

Die nun bekannten Daten zu der Empfangsfeldstärke der einzelnen Funkverbindungen zwischen den Datensammlern 10, 11 nutzt der Master-Datensammler 10, um eine vorteilhafte Netzwerktopologie zu ermitteln und diese an die anderen Datensammler in einem Organisations-Datenpaket mitzuteilen, das erfindungsgemäß entweder ein eigenes Datenpaket oder ein beispielsweise in ein Synchronisations-Datenpaket eingebundenes Datenpaket sein kann.

Solange nur eine erste Datensammler-Hierarchieebene unter dem zentralen Master-Datensammler beteiligt ist, beispielsweise nach einem erstmaligen Durchlaufen der ersten und zweiten Inbetriebnahmephase, fällt diese Topologie wahrscheinlich flach aus, muss dies aber nicht, da ja zu einzelnen Datensammlern eine schwache, d.h. gegen Änderungen Verstörungen anfällige Funkverbindung bestehen kann, die in einer höheren Hierarchiestufe eine zuverlässigere Kommunikation ermöglicht.

Nachdem alle bisher beteiligten Datensammler 11 die neue Topologie durch Mitteilung ihrer Knotennummern N sowie der zugehörigen Kind- und Elternknoten (Datensammler 11) kennen, gehen die Datensammler 11 in den Zustand 4 über, in dem sie nach wie vor synchron (C) und in dem Netzwerk vollständig konfiguriert (Z) sind. Dies ist durch den Pfeil "3-4" in Fig. 1 dargestellt.

Es ist möglich, dass ein Datensammler 11 (Netzwerkknoten) im Zustand 3 wegen Störungen im Funkkanal die neue Topologie nicht erhält. Dies kann auch bei der späteren regelmäßigen Topologie-Überprüfung passieren, die aus dem Zustand 4 heraus vorgenommen wird. Der Datensammler 11 erwartet in dieser Phase eine neue Topologie, in der möglicherweise seine bisherige Knotennummer an einen anderen Datensammler 11 (Netzwerkknoten) vergeben wird. Falls er also in dieser Phase keine neue Topologie erhält, geht er nach Ablauf dieser zweiten Inbetriebnahmephase direkt in den Zustand 1, asynchron, unkonfiguriert über. Dies ist durch die Pfeile "3-1" und "4-1" in Fig. 1 dargestellt. So wird eine versehentliche Mehrfachvergabe von Netzwerk-Knotennummern sicher vermieden.

Falls nach einem erstmaligen Durchlaufen der ersten und zweiten Inbetriebnahmephasen noch zu synchronisierende Datensammler 11 in der Liste des Master-Datensammlers 10 übrig sind, was z.B. dann der Fall sein kann, wenn diese noch übrigen Datensammler 11 nicht im Reichweitenbereich des zentralen Master-Datensammlers 10 liegen, können die ersten und zweiten Inbetriebnahmephasen erfindungsgemäß nochmalig durchlaufen werden.

In einer erneut durchlaufenden ersten Inbetriebnahmephase ordnet der zentrale Master-Datensammler 10 den nun noch zu synchronisierenden Datensammlern 11 erneut vorläufige Knotennummern N zu, wobei er die Knotennummern N der bereits vollständig synchronisierten und konfigurierten Datensammler 11 im Zustand 4 berücksichtigt. Diese Zuordnung übermittelt er dann auch an die bereits synchronen Datensammler 11 im Zustand 4 im Netzwerk. Die zuletzt synchronisierten Datensammler 11 gehen dann in den Dauerempfang für Hilfe-Datenpakete der noch zu synchronisierenden Datensammlern 11.

Alternativ können auch alle bereits synchronen Datensammler 11 in den Dauer-empfang gehen, was deren Stromverbrauch hier jedoch erhöht, aber die Sicherheit der Inbetriebnahme eventuell vergrößert.

Im Rahmen einer erneuten Inbetriebnahmephase kann es vorkommen, dass ein Hilfe-Datenpaket nun von mehreren bereits synchronen Datensammlern 11 beantwortet wird. Der das Hilfe-Datenpaket aussendende Datensammler 11 wählt in diesem Fall sinnvollerweise den bereits synchronisierten Datensammler 11 als Elternknoten aus, den er am stärksten, d.h. mit der höchsten Empfangsfeldstärke, empfängt. Von da an läuft die erste Inbetriebnahmephase genau so ab wie zuvor beschrieben, so dass neu gefundene Datensammler von dem Zustand 1 über den Zustand 2 in den Zustand 3 gelangen. Auch die zweite Inbetriebnahmephase wiederholt sich anschließend wie zuvor beschrieben. An deren Ende sind auch die Datensammler 11 der zweiten Hierarchieebene synchronisiert und konfiguriert, d.h. in dem Zustand 4.

Die ersten und zweiten Inbetriebnahmephasen werden so lange wiederholt, solange in der ersten Inbetriebnahmephase noch Hilfe-Datenpakete von bisher nicht synchronisierten Datensammlern 11 empfangen werden. Ist dies nicht mehr der Fall, kann die zweite Inbetriebnahmephase noch einmal durchlaufen werden, um eine vollständige Empfangsstärken-Matrix zu erzeugen, die Grundlage für eine endgültige Netzwerk-Topologie ist.

Sofern jetzt noch Datensammler 11 aus der ursprünglichen Liste der zu synchronisierenden Datensammler 11 übrig sind, die nicht in das Datensammlernetzwerk eingebunden werden konnten, so liegt dies daran, dass sie entweder außerhalb der Reichweite aller synchronisierten Datensammler 11 liegen oder defekt sind. Sie sind damit per se nicht in das Netzwerk einbindbar, wobei ggf. ein Wartungseinsatz durch den zentralen Master-Datensammler 10 ausgelöst werden kann.

Eine Inselbildung mit mehreren lokalen Master-Datensammlern, wie sie im Stand der Technik vorkommen kann und eingangs beschrieben wurde, ist durch die zentrale Kontrolle des zentralen Master-Datensammlers 10 mit dem erfindungsgemäßen Inbetriebnahme- und Organisationsverfahren ausgeschlossen.

In einer vorteilhaften Ausführung wird die zweite Inbetriebnahmephase auch im laufenden Betrieb des Netzwerks in regelmäßigen Zeitabständen durchgeführt. Dies dient dann nicht der Synchronisierung neuer Datensammler 11, sondern der Aktualisierung der Netzwerk-Topologie. Falls sich die Funkverbindungen während des laufenden Betriebs ändern, kann die Aktualisierung der Topologie des Netzwerks vorteilhaft sein, weil schwächer gewordene Funkverbindungen zwischen einzelnen Datensammlern 10, 11 ggf. durch zuverlässigere ersetzt werden können.

Eine regelmäßige Topologie-Aktualisierung kann auch dazu dienen, die Batteriebelastung der einzelnen Datensammler 11 auszubalancieren. Dazu wird die Ladungsaufnahme in den einzelnen Datensammlern 11 laufend rechnerisch oder messtechnisch mit verfolgt. Bei einer Topologie-Aktualisierung können dann Datensammler 11, die bis dahin durch eine zentrale Position im Netzwerk mehr Ladung bzw. Energie verbraucht haben, in der Topologie bevorzugt durch solche ersetzt werden, die bisher z.B. durch eine Randlage in der Topologie weniger Ladung bzw. Energie verbraucht haben. Ein solches Vorgehen erlaubt eine gleichmäßigere Batterieauslastung der Datensammler 11, die der Lebensdauer der Gesamtheit der Datensammler 11 des Netzes zuträglich ist und damit eine optimal lange Lebensdauer ohne Servicefall für einen Batteriewechsel erlaubt.

Während des laufenden Betriebs überprüft ein Datensammler 11 im Zustand 4 immer, ob er die regelmäßigen Synchronisations-Datenpakete zu den vorgesehenen Zeiten in dem Zeitschema erhält. Dies ist durch den Pfeil "4-4" dargestellt. Falls im laufenden Netzwerkbetrieb ein Datensammler 11 dagegen vorübergehend den Kontakt zu seinem den Elternknoten bildenden Datensammler 11 verliert, d.h. keine Synchronisations-Datenpakete mehr von diesem Datensammler 11 empfängt, kann er in einer weiteren vorteilhaften Variante der Erfindung zunächst in einen Zustand 5 wechseln, in dem der Datensammler zwar noch konfiguriert (Z) ist, aber in einen Zustand grob synchron (B) gewechselt hat. Sobald der Datensammler 11 wieder Synchronisations-Datenpakete von seinem Eltern-Datensammler 11 empfängt, geht er zurück in den Zustand 4. Andernfalls geht er nach dem Nicht-Empfang erwarteter M Synchronisations-Datenpakete in den Zustand 1 über, wobei M ein Schwellwert für eine konfigurierbare Anzahl von Fehlversuchen zum Empfang regulärer Synchronisations-Datenpakete ist. Im Zustand 5 aktiviert der Datensammler 11 also einen Zähler, der die erfolglosen Synchronisationsversuche durch Empfang von Synchronisations-Datenpakete bis zum Erreichen des Schwellwertes hin zählt, um dann in den Zustand eines asynchronen Datensammlers (Zustand 1) zurück zu wechseln.

Dieser in Fig. 1 für einen Datensammler 11 dargestellte Zustandsplan gilt für alle Datensammler 11 außer dem Master-Datensammler 10, der seinen Zustand 4 per Definitionen nicht verlassen kann.

Mit Bezug auf die Fig. 2 bis 6 wird nachfolgend ein Inbetriebnahmelauf beispielhaft dargestellt.

Fig. 2 zeigt ein System aus einem zentralen Master-Datensammler 10 und fünf weiteren Datensammlern 11, die zum Bilden eines Netzwerkes zur Kommunikation in Betrieb zu nehmen bzw. zu organisieren sind. Dazu müssen die Datensammler 11 mit dem Master-Datensammler 10 synchronisiert werden. Nach einer Synchronisation bilden die in Fig. 2 dargestellten Master-Datensammler 10 und Datensammler 11 also ein erfindungsgemäßes Datensammlernetzwerk.

Bereits bei der Herstellung wurde jedem Datensammler 11 eine Identifikationsnummer ID gegeben, die für alle Netzwerke eindeutig ist bzw. mit ausreichender statistischer Wahrscheinlichkeit eindeutig ist, so dass für die Praxis davon ausgegangen werden kann, dass nicht zwei Datensammler 11 mit identischer Identifikationsnummer ID in einem oder mehreren Netzwerken integriert werden sollen, die im wechselseitigen Funkempfangsbereich liegen.

Für die in einem Netzwerk in Betrieb zu nehmenden Datensammler 11 werden die Identifikationsnummern ID dem zentralen Master-Datensammler zu Beginn des Ablaufs durch Übermittlung einer entsprechenden Liste bekannt gemacht. In Fig. 2 sind dies die Datensammler 11 mit den Identifikationsnummern ID = 1000, ID = 1111, ID = 3333, ID = 1001 und ID = 999.

Zu Beginn der ersten Inbetriebnahmephase ordnet der zentrale Master-Datensammler 10, der selbst immer die Knotennummer N = 0 hat, jedem der Datensammler 11 eine vorläufige Knotennummer N zu. In diesem Beispiel sei angenommen, dass der Datensammler 11 mit der Identifikationsnummer ID = 999 die Knotennummer N = 1, der Datensammler 11 mit der Identifikationsnummer ID = 1000 die Knotennummer N = 2, der Datensammler 11 mit der Identifikationsnummer ID = 1001 die Knotennummer N = 3, der Datensammler 11 mit der Identifikationsnummer ID = 1111 die Knotennummer N = 4 und der Datensammler 11 mit der Identifikationsnummer ID = 3333 die Knotennummer N = 5 zugewiesen bekommt. Der zentrale Master-Datensammler 10 geht jetzt für die Dauer des Hilfe-Empfangsintervalls auf Dauerempfang für die Hilfe-Datenpakete 12, die durch die in Betrieb zu nehmenden bzw. zu synchronisierenden Datensammler 11 in Hilfe-Sendeintervallen ausgesendet werden.

In dem in Fig. 2 dargestellten Beispiel empfängt der Master-Datensammler 10 die Hilfe-Datenpakete 12 der Datensammler 11 mit den Identifikationsnummern ID = 1000 und ID = 3333. Diese beantwortet er umgehend mit Antwort-Datenpaketen 13, in denen er den Datensammlern 11 eine Synchronisationsinformation übermittelt. Diese enthält die diesen Datensammlern 11 zugewiesenen vorläufigen Knotennummern (N = 2 für den Datensammler ID = 1000 und N = 5 für den Datensammler ID = 3333). Außerdem enthält das Antwort-Datenpaket zur Vermeidung von Verwechslungen die Identifikationsnummer ID des jeweils adressierten Datensammlers 11 und den Aussendezeitpunkt, beispielsweise als bis dahin noch verbleibende Zeitspanne, des nächsten Synchronisations-Datenpakets, das im Rahmen einer synchronen Funkverbindung 14 regelmäßig ausgesendet wird.

Die beiden Datensammler 11 gehen dann in den Zustand 2 (grob synchron B, vorläufig konfiguriert Y) über und empfangen nun regelmäßig die Daten-Synchronisationspakete im Rahmen der synchronen Funkverbindung 14. Nach Empfang mindestens zweier regelmäßiger Synchronisations-Datenpakete gleichen die Datensammler 11 mit den Identifikationsnummern ID = 1000 und ID = 3333 ihre internen Uhren an die interne Uhr des Master-Datensammlers 10 an, wie bereits ausführlich beschrieben wurde. Danach gehen die Datensammler mit den Identifikationsnummern ID = 1000 und ID = 3333 in den Zustand 3 (synchron C, vorläufig konfiguriert Y) über, in dem die Datensammler vollständig synchron über synchrone Funkverbindungen 14 mit dem zentralen Master-Datensammler 10 verbunden sind und Kenntnis über ihre vorläufigen Knotennummern N = 2 bzw. N = 5 haben. Dieser Zustand ist in Fig. 3 dargestellt.

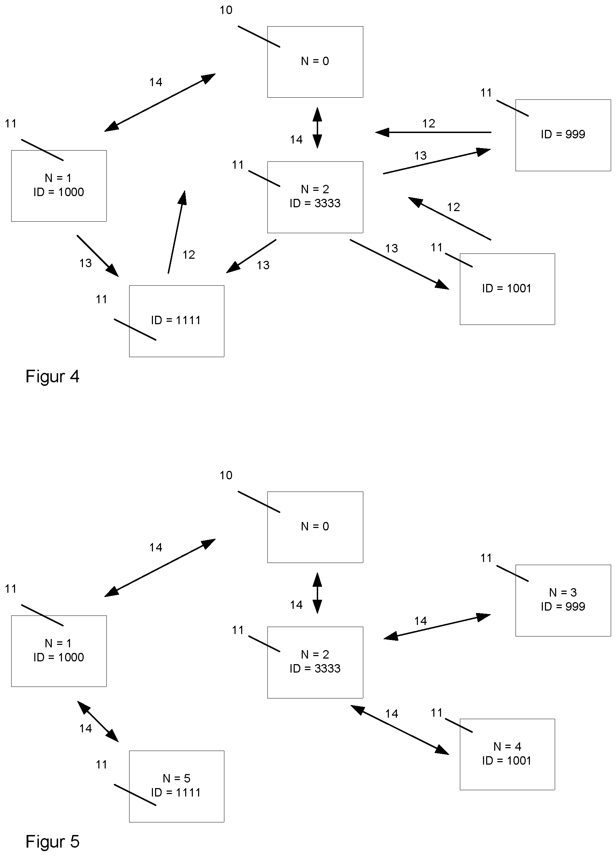

In der sich anschließenden zweiten Inbetriebnahmephase teilt der zentrale Master-Datensammler 10 den beiden gerade synchronisierten Datensammlern nach der Neuordnung der Topologie des Funknetzes in der beschriebenen Weise die neuen Knotennummern N = 1 und N = 2 mit, wie aus Fig. 4 ersichtlich, indem die Knotennummern N = 2 in N = 1 und N = 5 in N = 2 geändert wurden.

Da offensichtlich noch zu synchronisierende Datensammler 11 in der Liste übrig sind, initiiert der zentrale Master-Datensammler 10 eine weitere erste Inbetriebnahmephase, in der er zunächst den noch zu synchronisierenden Datensammlern eine neue vorläufige Knotennummer zuteilt, die im Netzwerk eindeutig sein muss und die bereits zugewiesenen Knotennummern N = 1 für den Datensammler 11 mit der Identifikationsnummer ID = 1000 und N = 2 für den Datensammler 11 mit der Identifikationsnummer ID = 3333 berücksichtigt. Entsprechend ordnet der Master-Datensammler 10 in dem dargestellten Beispiel den Datensammler 11 mit der Identifikationsnummer ID = 999 die Knotennummer N = 3, dem Datensammler 11 mit der Identifikationsnummer ID = 1001 die Knotennummer N = 4 und dem Datensammler 11 mit der Identifikationsnummer ID = 1111 die Knotennummer N = 5 mit. Dann versetzt er durch einen entsprechenden über die synchrone Funkverbindung 14 erteilten Befehl die in dem bestehenden Netzwerk schon synchronen Datensammler (mit den Knotennummern N = 1 und N = 2) in dem Dauerempfang der Hilfe-Datenpakete 12.

Wie in Fig. 4 dargestellt, empfangen und beantworten die Datensammler 11 mit den Knotennummern N = 1 und N = 2 die Hilfe-Datenpakete 12 des Datensammlers 11 mit der Identifikationsnummer ID = 1111. Die Hilfe-Datenpakete 12 der Datensammler 11 mit den Identifikationsnummern ID = 999 und ID = 1001 werden hingegen nur von dem synchronen Datensammler mit der Knotennummer N = 2 empfangen und durch ein Antwort-Datenpaket beantwortet.

Der Datensammler 11 mit der Identifikationsnummer ID = 1111 erhält also von zwei Datensammlern 11 Antworten, wobei er den Datensammler mit der Knotennummer N = 1 als (vorläufigen) Elternknoten bzw. Elterndatensammler auswählt, weil er dessen Antwort-Datenpaket 13 mit der größeren Empfangsfeldstärke empfangen kann.

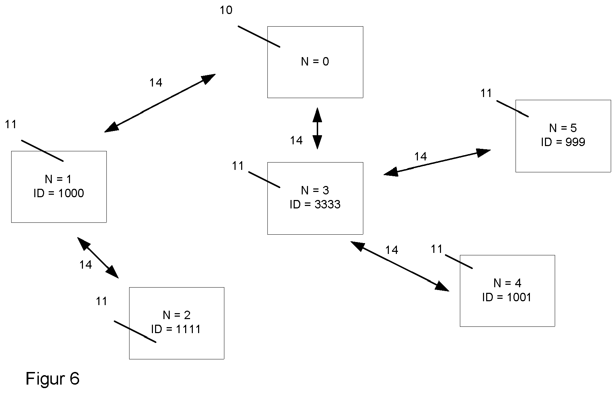

Zu Beginn der sich dann wieder anschließenden zweiten Inbetriebnahmephase hat sich also die in Fig. 5 dargestellte Netzwerk-Topologie ausgebildet, in der nun alle Datensammler 11 über synchrone Funkverbindungen 14 miteinander verbunden sind, so dass das synchrone Netzwerk ausgebildet ist. Bei der sich jetzt erneut anschließenden Vermessung der Empfangsfeldstärke der synchronen Funkverbindung 14 zwischen allen Datensammlern 11 zur Optimierung der Topologie ermittelt der zentrale Master-Datensammler 10 dieselbe Topologie, wie sie schon bestand. Ausschließlich die Nummerierung der Knoten muss aus Gründen des optimalen Netzwerkbetriebs noch geändert werden. Diese neue Nummerierung wird den Datensammlern 11 am Ende der zweiten Inbetriebnahmephase übermittelt, so dass sich nach der Übermittlung die in Fig. 6 dargestellte Netzwerk-Konfiguration etabliert.

Da alle Datensammler 11 aus der ursprünglichen Liste nun synchronisiert werden konnten, ist die Inbetriebnahme und Organisation des Netzwerks jetzt abgeschlossen. Durch spätere, ggf. regelmäßige Durchführung der zweiten Inbetriebnahmephase kann die Netzwerk-Topologie bei Bedarf jederzeit einfach aktualisiert werden.

Mit dem erfindungsgemäß vorgeschlagenen Verfahren wird also eine sehr energieeffiziente Inbetriebnahme bzw. Synchronisierung eines Netzwerks von batteriebetriebenen Datensammlern bzw. Netzwerkknoten ermöglicht. Dies wird insbesondere dadurch erreicht, dass zu synchronisierende Netzwerkknoten bzw. Datensammler 11 selbst keine Dauerempfangsperioden haben, sondern stattdessen mit relativ großer Häufigkeit funktechnisch kurze und damit energiearme Hilferufe aussenden, so dass die bereits synchronen Datensammler 11 bzw. Netzwerkknoten mit entsprechend kurzen Dauerempfangsperioden auskommen. Die Hilferufe und die dazu gehörenden Empfangszeitschlitze können so kurz gehalten werden, weil ein asynchroner neuer Datensammler 11 in diesem Zustand nichts anderes zu tun hat, als ein Hilfe-Datenpaket mit seiner Identifikation auszusenden.

Das erfindungsgemäß vorzugsweise auch zweiphasig ausgestaltete Inbetriebnahme- bzw. Organisationsverfahren hat zudem den Vorteil, dass die zweite Inbetriebnahmephase auch im laufenden Betrieb zur regelmäßigen Aktualisierung der Netzwerk-Topologie verwendet werden kann. Das ist deswegen besonders vorteilhaft, weil so vorhandene Software für mehrere Zwecke genutzt werden kann, was die Komplexität des Systems und damit die Entwicklungs-und Testphase verringert sowie die vorhandene Rechenleistung optimal ausnutzt.

Die zentrale Steuerung des Inbetriebnahmeablaufs durch den Master-Datensammler 10 bzw. Master-Netzwerkknoten 10 verhindert ferner eine Inselbildung, in der sich Teile des Datensammlernetzwerks selbständig machen, ohne dies - zumindest für eine Mindestdauer - zu bemerken. Dies beschleunigt die Inbetriebnahme und verhindert unnötige Serviceeinsätze.

Der Inbetriebnahmeablauf und auch die im laufenden Betrieb gegebenen durchzuführende Topologie-Aktualisierung kann von dem zentralen Master-Datensammler 10 initiiert automatisch ablaufen, ohne dass Personal und/oder Hilfsgeräte dafür an den Betriebsort gebracht werden müssten. So kann auch bei wechselnden Eigenschaften der Funkverbindungen oder gar bei Ausfällen von Funkverbindungen schnell und automatisch reagiert werden, was zu einer insgesamt erhöhten Verfügbarkeit des Datensammlernetzwerks bei guter Energieausnutzung der batteriebetriebenen Datensammler bzw. Netzwerkknoten führt.

### Bezugszeichenliste:

- 1: Zustand 1: asynchron (A), unkonfiguriert (X) Hilfe-Datenpakete senden
- 2: Zustand 2: grob synchron (B), vorläufig konfiguriert (Y) auf Synchronisations-Datenpakete hören
- 3: Zustand 3: synchron (C), vorläufig konfiguriert (Y) Senden und Empfangen für Empfangsfeldstärkemessung, Hören auf neue Netzwerktopologie
- 4: Zustand 4: synchron (C), konfiguriert (Z) Teilnahme am Regelbetrieb und ggf. einer Empfangsfeldstärkemessung
- 5: Zustand 5: grob synchron (B), konfiguriert (Z) Hören auf Synchronisations-Datenpakte und Zählen dem Empfangs-Fehlversuchen.
- 2-1: Übergang: ein Synchronisations-Datenpaket verpasst
- 2-3: Übergang: zwei aufeinander folgende Synchronisations-Datenpakete empfangen
- 3-2: Übergang: ein Synchronisations-Datenpaket verpasst
- 3-1: Übergang: Topologie-Aktualisierung fehlgeschlagen
- 3-4: Übergang: Topologie-Aktualisierung
- 4-1: Übergang: Topologie-Aktualisierung fehlgeschlagen
- 4-4: Übergang: Topologie-Aktualisierung
- 4-5: Übergang: ein Synchronisations-Datenpaket verpasst
- 5-4: Übergang: zwei aufeinanderfolgende Synchronisations-Datenpakete empfangen
- 5-1: Übergang: N Synchronisations-Datenpakete verpasst
- 10: zentraler Master-Datensammler (Master-Netzwerkknoten)
- 11: Datensammler (Netzwerkknoten)
- 12: Hilfe-Datenpaket
- 13: Antwort-Datenpaket
- 14: synchrone Funkverbindung

- ID: Identifikationsnummer
- N: Knotennummer

## Patentansprüche

1. Verfahren zur Organisation und/oder Inbetriebnahme eines Netzwerkes zur Kommunikation mit Netzwerkknoten (11), wobei die Netzwerknoten (11) des Netzwerks synchronisiert werden und eine Datenübertragung zwischen den synchronisierten Netzwerkknoten (11) nach einem Zeitschema stattfindet, in dem festgelegt ist, zu welchen Zeitpunkten eine Datenübertragung zwischen welchen Netzwerkknoten (11) in welcher Übertragungsrichtung erfolgen kann, wobei das Netzwerk nach Einrichtung bei der Inbetriebnahme eine hierarchische Netzwerk-Topologie mit einem zentralen Master-Netzwerkknoten (10) und mit mit diesem baumförmig über eine oder mehrere Hierarchieebenen verbundenen Netzwerkknoten (11) aufweist, wobei nicht synchronisierte Netzwerkknoten (11) Hilfe-Datenpakete (12) in vorgegebenen Hilfe-Sendeintervallen aussenden und im Anschluss an das Aussenden eines Hilfe-Datenpakets für ein Antwort-Empfangsintervall auf Empfang schalten und und wobei der Master-Netzwercknoten und/oder synchronisierte Netzwerkkonten zur Synchronisation eines nicht synchronisierten Netzwerkknotens für ein Hilfe-Empfangsintervall auf Dauerempfang schalten und nach Empfang eines Hilfe-Datenpakets ein Antwort-Datenpaket (13) aussenden, welches eine Synchronisationsinformation enthält, **dadurch gekennzeichnet, dass** die Synchronisation nicht synchronisierter Netzwerkknoten (11) ausgehend von dem Master-Netzwerkknoten (10), der den Netzwerkknoten (11) der niedrigsten Hierarchieebene bildet, hierarchieebenenweise erfolgt derart, dass zuerst in einem ersten Synchronisationsdurchgang der Master-Netzwerkknoten (10) für ein Hilfe-Empfangsintervall auf Dauerempfang schaltet und Antwort-Datenpakte für die empfangenen Hilfe-Datenpakete aussendet und nachfolgend jeweils bereits synchronisierte Netzwerkknoten (11) der jeweils nächsthöheren Hierarchieebene für ein Hilfe-Empfangsintervall auf Dauerempfang schalten und Antwort-Datenpakte (13) für die empfangenen Hilfe-Datenpakete (12) aussenden, bis alle zu synchronisierenden Netzwerkknoten (11) synchronisiert sind oder über eine vorgegebene Anzahl von Hilfe-Empfangsintervallen kein weiteres Hilfe-Datenpaket durch in dem Netzwerk bereits synchronisierte Netzwerkknoten (11) empfangen wird.

2. Verfahren nach Anspruch 1, **dadurch gekennzeichnet, dass** der Master-Netzwerkknoten (10) nach der Synchronisation eines oder mehrerer Netzwercknoten (11) und/oder in konfigurierbaren Zeitabständen ein Anforderungs-Datenpaket an alle synchronisierten Netzwerkknoten (11) aussendet und diese veranlasst werden, zu den ihnen zugewiesenen Zeitpunkten ein Datenpaket oder mehrere Datenpakete auszusenden, und zu allen Empfangszeitpunkten die Datenpakete anderer Netzwerkknoten zu empfangen, wobei die Empfangsfeldstärke gemessen und an den zentralen Masternetzwerkknoten (10) übertragen wird, und dass der Master-Netzwerkknoten (10) unter Verwendung der Empfangsfeldstärken eine vorteilhafte Netzwerktopologie ermittelt und den Netzwerkkonten (11) in einem Organisations-Datenpaket mitteilt.

3. Verfahren nach Anspruch 1 oder 2, **dadurch gekennzeichnet, dass** das Hilfe-Sendeintervall mit dem Aussenden eines Hilfe-Datenpakets (12) und dem anschließenden Empfang in einem nicht synchronisierten Netzwerkknoten (11) derart bestimmt wird, dass der durchschnittliche Stromverbrauch in einer Betriebsphase mit der Aussendung von Hilfe-Sendeintervallen nicht größer ist als der durchschnittliche Stromverbrauch im Regelbetrieb eines synchronisierten Netzwerkknotens (11).

4. Verfahren nach einem der vorhergehenden Ansprüche, **dadurch gekennzeichnet, dass** der Master-Netzwerkknoten (10) eine Liste mit in Betrieb zu nehmenden und/oder an dem Netzwerk teilnehmenden Netzwerkknoten (11) erhält.

5. Verfahren nach einem der vorhergehenden Ansprüche, **dadurch gekennzeichnet, dass** der Master-Netzwerkknoten (10) allen Netzwerkknoten (11) in dem Netzwerk eindeutige Knotennummern (N) zuweist.

6. Verfahren nach einem der vorhergehenden Ansprüche, **dadurch gekennzeichnet, dass** ein Hilfe-Empfangsintervall mehrere Hilfe-Sendeintervalle umfasst.

7. Verfahren nach einem der vorhergehenden Ansprüche, **dadurch gekennzeichnet, dass** ein Netzwerkknoten (11) nach Erhalt der Synchronisationsinformation in einem Hilfe-Datenpaket für das nächste und mindestens ein weiteres der regelmäßig folgenden Synchronisations-Datenpakete auf Empfang schaltet und den zeitlichen Abstand des nächsten und des mindestens einen weiteren Synchronisations-Datenpakets entsprechend der internen Uhr des Netzwerkknotens (11) ermittelt und mit dem entsprechend dem Zeitschema vorgesehenen Abstand der Synchronisations-Datenpakete vergleicht, um eine Korrektur für die interne Uhr zu ermitteln und bei den nächsten Empfangszeitfenstern zu berücksichtigen.

8. Verfahren nach einem der vorhergehdenen Ansprüche, **dadurch gekennzeichnet, dass** nach jeder hieraricheebenenweisen Synchronisation der Master-Netzwerkknoten (10) ein Anforderungs-Datenpaket an alle synchronisierten Netzwerkknoten (11) aussendet und diese veranlasst werden, zu den ihnen zugewiesenen Zeitpunkten, d.h. in den Sendezeitschlitzen, ein oder mehrere Datenpakete auszusenden, und in allen Empfangszeitschlitzen die Datenpakete anderer Netzwerkknoten (11) zu empfangen, wobei die Empfangsfeldstärke gemessen und an den zentralen Master-Netzwerkknoten (10) übertragen wird, und dass der Master-Netzwerkknoten (10) unter Verwendung der Empfangsfeldstärken eine vorteilhafte Netzwerktopologie ermittelt und den Netzwerkkonten (11) in einem Organisations-Datenpaket mitteilt.

9. Verfahren nach einem der vorhergehenden Ansprüche, **dadurch gekennzeichnet, dass** ein synchronisierter Netzwerkknoten (11) nach Verpassen eines ersten regelmäßigen Synchronisations-Datenpakets einen Zähler über den Nicht-Empfang der nachfolgenden regelmäßigen Synchronisations-Datenpakete startet und nach einem nachfolgenden Empfang eines regelmäßigen Synchronisations-Datenpakets den Zähler wieder zurücksetzt.

10. Verfahren nach Anspruch 9, **dadurch gekennzeichnet, dass** der synchronisierte Netzwerkknoten (11) bei Erreichen eines vorgegebenen Zählerschwellenwerts in den Zustand (1) eines nicht synchronisierten Netzwerkknoten (11) wechselt.

11. Netzwerkknoten für die Integration in ein Netzwerk zur Kommunikation mit einer Sende- und Empfangseinrichtung, welche zur bidirektionalen synchronisierten Datenübertragung mit anderen Netzwerkknoten (11) nach einem Zeitschema eingerichtet sind, in welchem Zeitschema festgelegt ist, zu welchen Zeitpunkten eine Datenübertragung zwischen welchen Netzwerkknoten (11) in welcher Übertragungsrichtung erfolgen kann, mit einer Recheneinheit und mit einer Energieversorgung, wobei die Recheneinheit des Netzwerkknotens (11) dazu eingerichtet ist,
- in einem nicht synchronisierten Zustand des Netzwerkknotens in dem Netzwerk Hilfe-Datenpakete (12) in vorgegebenen Hilfe-Sendeintervallen auszusenden und im Anschluss an das Aussenden eines Hilfe-Datenpakets für ein Antwort-Empfangsintervall auf Empfang zu schalten,
- ein empfangenes Antwort-Datenpaket (13) mit einer Synchronisationsinformation auszuwerten,
- nach Auswertung der Synchronisationsinformation ein Synchronisationsdatenpaket zu empfangen,
- nach Empfang eines Anforderungs-Datenpaktes zu dem dem Netzwerkknoten (11) zugewiesenen Zeitpunkt Datenpakete auszusenden und zu allen Empfangszeitpunkten auf Empfang zu schalten, die Empfangsfeldstärke zu erfassen und in einem vorgesehenen Datenpaket zu übertragen,
- ein Organisations-Datenpakt mit der Netzwerktopologie auszuwerten,
**dadurch gekennzeichnet, dass** die Recheneinheit des Netzwerkknotens (11) weiter dazu eingerichtet ist,
- dem Netzwerkknoten (11) nach seiner Synchronistation durch Netzwerknoten einer Hierarchieebene die nächsthöhere Hierarchieebene zuzuweisen und
- und nach seiner Synchronisation für ein Hilfe-Empfangsintervall auf Dauerempfang zu schalten und Antwort-Datenpakte (13) für die empfangenen Hilfe-Datenpakete (12) auszusenden.

12. Master-Netzwerkknoten für die Integration in ein Netzwerk zur Kommunikation mit einer Sende- und Empfangseinrichtung, welche zur bidirektionalen synchronisierten Datenübertragung mit anderen Netzwerkknoten (11) nach einem Zeitschema eingerichtet sind, in welchem Zeitschema festgelegt ist, zu welchen Zeitpunkten eine Datenübertragung zwischen welchen Netzwerkknoten (11) in welcher Übertragungsrichtung erfolgen kann, mit einer Recheneinheit und mit einer Energieversorgung und mit einer Inbetriebnahmeschnittstelle, wobei die Recheneinheit dazu eingerichtet ist,
- zur Synchronisation mindestens eines nicht synchronisierten Netzwerkknotens (11) für ein Hilfe-Empfangsintervall auf Empfang schalten und nach Empfang eines Hilfe-Datenpakets (12) ein Antwort-Datenpaket (13) aussenden, welches eine Synchronisationsinformation enthält,
- nach der Synchronisation eines oder mehrerer Netzwerkknoten (11) und/oder in konfigurierbaren Zeitabständen ein Anforderungs-Datenpaket an alle synchronisierten Netzwerkknoten (11) auszusenden, wobei die synchronisierten Netzwerkknoten (11) und der Master-Netzwerkknoten (10) veranlasst werden, zu den ihnen zugewiesenen Zeitpunkten ein oder mehrere Datenpakete auszusenden, und zu allen Empfangszeitpunkten die Datenpakete anderer Netzwercknoten (11) zu empfangen, wobei die Empfangsfeldstärke erfasst wird,
- unter Verwendung der Empfangsfeldstärken eine vorteilhafte Netzwerktopologie zu ermitteln und den anderen Netzwerkkonten (11) in einem Organisations-Datenpaket mitzuteilen,
**dadurch gekennzeichnet, dass** die Recheneinheit dazu eingerichtet ist,
- Netzwerkknoten nach ihrer Synchronisation und Einbindung in das Netzwerk zur Kommunikation dazu aufzufordern, auf Dauerempfang für weitere noch zu synchronisierende Netzwerkknoten zu gehen, bis alle zu synchronisierenden Netzwerkknoten (11) synchronisiert sind oder über eine vorgegebene Anzahl von Hilfe-Empfangsintervallen kein weiteres Hilfe-Datenpaket durch in dem Netzwerk bereits synchronisierte Netzwerkknoten (11) empfangen wird.

13. Netzwerknoten nach Anspruch 11 oder Master-Netzwerkknoten nach Anspruch 12, **dadurch gekennzeichnet, dass** die Recheneinheit zur Durchführung des Verfahrens nach einem der Ansprüche 1 bis 10 eingerichtet ist.

14. Verwendung eines Master-Netzwerkknotens (10) nach Anspruch 12 und mindestens eines Netzwerkknotens (11) nach Anspruch 11zum Aufbau eines Netzwerks zur Kommunikation, das gemäß dem Verfahren nach einem der Ansprüche 1 bis 10 organisiert und/oder in Betrieb genommen wird.

## Claims

1. A method for organizing and/or commissioning a network for communication with network nodes (11), the network nodes (11) of the network being synchronized and data transmission taking place between the synchronized network nodes (11) according to a timing scheme, in which the times are determined at which data transmission between which network nodes (11) in which transmission direction can take place, the network, after set up during commissioning, having a hierarchical network topology with a central master network node (10) and network nodes (11) connected to the same in a tree-like manner over one or more hierarchy levels, non-synchronized network nodes (11) sending out support data packets (12) at predetermined support transmission intervals and, subsequent to the sending out of a support data packet, switching to receive for a response receiving interval and the master network node and/or synchronized network nodes switching to continuous reception for a support receiving interval for the synchronization of a non-synchronized network node and sending out a response data packet (13), which contains synchronization information, after receiving a support data packet, **characterized in that** the synchronization of non-synchronized network nodes (11) starting from the master network node (10), which forms the network node (11) of the lowest hierarchy level, takes place in such a manner in terms of hierarchy level that first, in a first synchronization pass, the master network node (10) switches to continuous reception for a support receiving interval and sends out response data packets for the received support data packets and subsequently, in each case already synchronized network nodes (11) of the respectively next-highest hierarchy level switch to continuous reception for a support receiving interval and send out response data packets (13) for the received support data packets (12), until all of the network nodes (11) to be synchronized are synchronized or no further support data packet is received through network nodes (11) already synchronized in the network over a predetermined number of support receiving intervals.

2. The method according to Claim 1, **characterized in that** the master network node (10) sends out a request data packet to all synchronized network nodes (11) after the synchronization of one or more network nodes (11) and/or at configurable time intervals and these synchronized network nodes are caused to send out a data packet or a plurality of data packets at the times assigned to them and to receive the data packets of other network nodes at all reception times, wherein the reception field strength is measured and transmitted to the central master network node (10), and **in that** the master network node (10) determines an advantageous network topology using the reception field strengths and communicates the same to the network nodes (11) in an organization data packet.

3. The method according to Claim 1 or 2, **characterized in that** the support transmission interval with the sending out of a support data packet (12) and the subsequent reception in a non-synchronized network node (11) is determined in such a manner that the average power consumption in an operating phase with the sending out of support transmission intervals is not larger than the average power consumption during regular operation of a synchronized network node (11).

4. The method according to one of the preceding claims, **characterized in that** the master network node (10) receives a list with network nodes (11) to be taken into operation and/or participating in the network.

5. The method according to one of the preceding claims, **characterized in that** the master network node (10) assigns unique node numbers (N) to all network nodes (11) in the network.

6. The method according to one of the preceding claims, **characterized in that** a support receiving interval comprises a plurality of support transmission intervals.

7. The method according to one of the preceding claims, **characterized in that** a network node (11) switches to receiving after receiving the synchronization information in a support data packet for the next and at least one further of the regularly following synchronization data packets and determines the temporal spacing of the next and the at least one further synchronization data packet according to the internal clock of the network node (11) and compares the same with the spacing of the synchronization data packets provided in accordance with the timing scheme, in order to determine a correction for the internal clock and take the same into account during the next reception time windows.

8. The method according to one of the preceding claims, **characterized in that** after each synchronization in terms of hierarchy level, the master network node (10) sends out a request data packet to all synchronized network nodes (11) and the same are caused to send out one or more data packets at the times assigned to them, i.e. in the transmission time slots, and to receive the data packets of other network nodes (11) in all receiving time slots, wherein the reception field strength is measured and transmitted to the central master network node (10), and **in that** the master network node (10) determines an advantageous network topology using the reception field strengths and communicates the same to the network nodes (11) in an organization data packet.

9. The method according to one of the preceding claims, **characterized in that** a synchronized network node (11), after missing a first regular synchronization data packet, starts a counter over the non-receipt of the subsequent regular synchronization data packets and resets the counter again after a subsequent receipt of a regular synchronization data packet.

10. The method according to Claim 9, **characterized in that** the synchronized network node (11) changes to the state (1) of a non-synchronized network node (11) after a predetermined counter threshold value is reached.

11. Network nodes for integration into a network for communication with a transmitting and receiving device, which are set up according to a timing scheme for bidirectional synchronized data transmission with other network nodes (11), in which timing scheme the times are determined at which data transmission between which network nodes (11) in which transmission direction can take place, having an arithmetic logic unit and having an energy supply, the arithmetic logic unit of the network node (11) being set up for
- sending out support data packets (12) at predetermined support transmission intervals in a non-synchronized state of the network node in the network and to switch to receiving subsequent to the sending out of a support data packet for a response receiving interval,
- evaluating a received response data packet (13) with synchronization information,
- receiving a synchronization data packet after evaluating the synchronization information,
- after receiving a request data packet, sending out data packets at the time assigned to the network node (11) and switching to receiving at all receiving times, detecting the reception field strength and transmitting the same in a provided data packet,
- evaluating an organization data packet with the network topology, **characterized in that** the arithmetic logic unit of the network node (11) is further set up for
- assigning the next highest hierarchy level to the network node (11) after the synchronization thereof by network nodes of a hierarchy level, and
- after the synchronization thereof for a support receiving interval, switching to continuous reception and sending out response data packets (13) for the received support data packets (12).

12. Master network nodes for integration into a network for communication with a transmitting and receiving device, which are set up according to a timing scheme for bidirectional synchronized data transmission with other network nodes (11), in which timing scheme the times are determined at which data transmission between which network nodes (11) in which transmission direction can take place, having an arithmetic logic unit and having an energy supply and with a commissioning interface, the arithmetic logic unit being set up for
- switching to receiving for a support receiving interval for synchronizing at least one non-synchronized network node (11), and after receiving a support data packet (12), sending out a response data packet (13), which contains synchronization information,
- sending out a request data packet to all synchronized network nodes (11) after the synchronization of one or more network nodes (11) and/or at configurable time intervals, the synchronized network nodes (11) and the master network nodes (10) being caused to send out one or more data packets at the times assigned to them, and receiving the data packets of other network nodes (11) at all receiving times, the reception field strength being detected,
- determining an advantageous network topology using the reception field strengths and communicating the same to the other network nodes (11) in an organization data packet,
**characterized in that** the arithmetic logic unit is set up for
- requesting network nodes, after the synchronization thereof and integration into the network for communication, to transition to continuous reception for further network nodes still to be synchronized until all network nodes (11) to be synchronized are synchronized or no further support data packet is received through network nodes (11) already synchronized in the network over a predetermined number of support receiving intervals.

13. Network nodes according to Claim 11 or master network nodes according to Claim 12, **characterized in that** the arithmetic logic unit is set up for carrying out the method according to one of Claims 1 to 10.

14. The use of a master network node (10) according to Claim 12 and at least one network node (11) according to Claim 11 for building a network for communication, which is organized and/or is put into operation according to the method according to one of Claims 1 to 10.

## Revendications

1. Procédé, destiné à organiser et/ou à mettre en service un réseau pour la communication avec des nœuds de réseau (11), lors duquel les nœuds de réseau (11) du réseau sont synchronisés et un transfert de données a lieu entre les nœuds de réseau (11) synchronisés selon un schéma temporel, dans lequel il est fixé à quels moments un transfert de données peut s'effectuer entre quels nœuds de réseau (11) et dans quelle direction de transfert, après installation, le réseau présentant lors de la mise en service une topologie de réseau hiérarchique avec un nœud de réseau maître (10) et avec des nœuds de réseau (11) connectés à celui-ci en forme d'arborescence via un ou plusieurs niveaux hiérarchiques, des nœuds de réseau (11) non synchronisés émettant des paquets de données auxiliaires (12) dans des intervalles d'émission auxiliaires et à la suite de l'émission d'un paquet de données auxiliaire, commutant sur une réception pour un intervalle de réception de réponse et pour la synchronisation d'un nœud de réseau non synchronisé, le nœud de réseau maître et/ou des nœuds de réseau synchronisés commutant pour un intervalle de réception auxiliaire sur une réception en continu et après réception d'un paquet de données auxiliaire, émettant un paquet de données de réponse (13), lequel contient une information de synchronisation, **caractérisé en ce que** la synchronisation de nœuds de réseau (11) non synchronisés s'effectue, niveau hiérarchique par niveau hiérarchique, à partir du nœud de réseau maître (10), qui constitue le nœud de réseau (11) ayant le niveau hiérarchique le plus bas, de telle sorte que d'abord, lors d'un premier passage de synchronisation, le nœud de réseau maître (10) commute sur réception en continu pour un intervalle de réception auxiliaire et émette des paquets de données de réponse pour les paquets de données auxiliaires réceptionnés et qu'ensuite, des nœuds de réseau (11) respectivement déjà synchronisés du niveau hiérarchique respectivement immédiatement supérieur commutent pour un intervalle de réception auxiliaire sur réception en continu et émettent des paquets de données de réponse (13) pour les paquets de données auxiliaires (12) réceptionnés, jusqu'à ce que tous les nœuds de réseau (11) qui doivent être synchronisés soient synchronisés ou que sur un nombre prédéfini d'intervalles de réception auxiliaires, aucun paquet de données auxiliaire supplémentaire ne soit réceptionné par les nœuds de réseau (11) déjà synchronisés dans le réseau.

2. Procédé selon la revendication 1, **caractérisé en ce qu'**après la synchronisation d'un ou de plusieurs nœuds de réseau (11) et/ou dans des écarts temporels configurables, le nœud de réseau maître (10) émet un paquet de données de demande à l'attention de tous les nœuds de réseau (11) synchronisés et ceux-ci sont incités à émettre aux moments qui leur sont affectés un paquet de données ou plusieurs paquets de données, et pour réceptionner à tous les moments de réception les paquets de données d'autres nœuds de réseau, l'intensité du champ de réception étant mesurée et transmise au nœud de réseau maître (10), et **en ce qu'**en utilisant les intensités de champ de réception, le nœud de réseau maître (10) détermine une topologie de réseau avantageuse et la communique aux nœuds de réseau (11) dans un paquet de données d'organisation.

3. Procédé selon la revendication 1 ou 2, **caractérisé en ce que** l'intervalle d'émission auxiliaire est déterminé avec l'émission d'un paquet de données auxiliaire (12) et la réception consécutive dans un nœud de réseau (11) non synchronisé, de telle sorte que la consommation électrique moyenne lors d'une phase de fonctionnement comprenant l'émission d'intervalles d'émission auxiliaires ne soit pas supérieure à la consommation électrique moyenne en mode réglage d'un nœud de réseau (11) synchronisé.

4. Procédé selon l'une quelconque des revendications précédentes, **caractérisé en ce que** le nœud de réseau maître (10) reçoit une liste des nœuds de réseau (11) qui doivent être mis en service et/ou qui participent au réseau.

5. Procédé selon l'une quelconque des revendications précédentes, **caractérisé en ce que** le nœud de réseau maître (10) affecte à tous les nœuds de réseau (11) dans le réseau des numéros de nœuds (N) univoques.

6. Procédé selon l'une quelconque des revendications précédentes, **caractérisé en ce qu'**un intervalle de réception auxiliaire comprend plusieurs intervalles d'émission auxiliaires.

7. Procédé selon l'une quelconque des revendications précédentes, **caractérisé en ce qu'**après avoir reçu l'information de synchronisation dans un paquet de données auxiliaire, un nœud de réseau (11) commute sur réception pour le paquet de données de synchronisation suivant et au moins un autre des paquets de données de synchronisation régulièrement consécutifs et détermine l'écart temporel du paquet de données de synchronisation suivant et l'au moins un autre paquet de données de synchronisation en fonction de l'horloge interne du nœud de réseau (11) et le compare avec l'écart prévu selon le schéma temporel des paquets de données de synchronisation, pour déterminer une correction de l'horloge interne et la prendre en considération dans les fenêtres de temps de réception suivantes.

8. Procédé selon l'une quelconque des revendications précédentes, **caractérisé en ce qu'**après chaque synchronisation, niveau hiérarchique par niveau hiérarchique, le nœud de réseau maître (10) émet un paquet de données de demande à l'attention de tous les nœuds de réseau (11) synchronisés et ceux-ci sont incités à émettre aux moments qui leur sont affectés, c'est-à-dire dans les créneaux temporel d'émission un ou plusieurs paquets de données, et dans tous les créneaux temporel d'émission, à réceptionner les paquets de données d'autres nœuds de réseau (11), l'intensité de champ de réception étant mesurée et transmise au nœud de réseau maître (10) centralisé, et **en ce qu'**en utilisant les intensités de champ de réception, le nœud de réseau maître (10) détermine une topologie de réseau avantageuse et la communique aux nœuds de réseau (11) dans un paquet de données d'organisation.

9. Procédé selon l'une quelconque des revendications précédentes, **caractérisé en ce qu'**après avoir manqué un premier paquet de données de synchronisation régulier, un nœud de réseau (11) synchronisé démarre un compteur concernant la non réception des paquets de données de synchronisation réguliers consécutifs et après une réception consécutive d'un paquet de données de synchronisation régulier, réinitialise le compteur.

10. Procédé selon la revendication 9, **caractérisé en ce qu'**à l'atteinte d'une valeur seuil prédéfinie pour le compteur, le nœud de réseau (11) synchronisé passe dans l'état (1) d'un nœud de réseau (11) non synchronisé.

11. Nœuds de réseau, destinés à être intégrés dans un réseau pour la communication avec un système émetteur et récepteur, qui sont aménagés pour le transfert de données bidirectionnel synchronisé avec d'autres nœuds de réseau (11) selon un schéma temporel, dans lequel schéma temporel il est fixé à quels moments, dans quelle direction de transfert un transfert de données peut s'effectuer entre quels nœuds de réseau (11), pourvus d'une unité de calcul et d'une alimentation en énergie, l'unité de calcul du nœud de réseau (11) étant aménagée,
- dans un état non synchronisé du nœud de réseau, pour émettre dans le réseau des paquets de données auxiliaires (12) dans des intervalles d'émission auxiliaires prédéfinis et pour commuter sur réception à la suite de l'émission d'un paquet de données auxiliaire pour un intervalle de réception de réponse,
- pour évaluer un paquet de données de réponse (13) réceptionné avec une information de synchronisation,
- après évaluation de l'information de synchronisation, pour réceptionner un paquet de données de synchronisation,
- après réception d'un paquet de données de demande, au moment affecté au nœud de réseau (11), pour émettre des paquets de données et à tous les moments de réception, pour commuter en réception, pour détecter l'intensité du champ de réception et pour la transférer dans un paquet de données prévu,
- pour évaluer un paquet de données d'organisation avec la topologie de réseau,
**caractérisés en ce que** l'unité de calcul du nœud de réseau (11) est aménagée en outre,
- après sa synchronisation par des nœuds de réseau d'un niveau hiérarchique, pour affecter au nœud de réseau (11) le niveau hiérarchique immédiatement supérieur et
- après sa synchronisation, pour commuter pour un intervalle de réception auxiliaire sur réception en continu et pour émettre des paquets de données de réponse (13) pour les paquets de données auxiliaires (12) réceptionnés.

12. Nœuds de réseau, destinés à être intégrés dans un réseau pour la communication avec un système émetteur et récepteur, qui sont aménagés pour le transfert de données bidirectionnel synchronisé avec d'autres nœuds de réseau (11) selon un schéma temporel, dans lequel schéma temporel il est fixé à quels moments, dans quelle direction de transfert un transfert de données peut s'effectuer entre quels nœuds de réseau (11), pourvus d'une unité de calcul et d'une alimentation en énergie et d'une interface de mise en service, l'unité de calcul étant aménagée,
- pour la synchronisation d'au moins un nœud de réseau (11) non synchronisé, pour commuter en réception pour un intervalle de réception auxiliaire, et après la réception d'un paquet de données auxiliaire (12), pour émettre un paquet de données de réponse (13), lequel contient une information de synchronisation,
- après la synchronisation d'un ou de plusieurs nœuds de réseau (11) et/ou dans des écarts temporels configurables, pour émettre un paquet de données de demande à l'attention de tous les nœuds de réseau (11) synchronisés, les nœuds de réseau (11) synchronisés et le nœud de réseau maître (10) étant incités à émettre aux moments qui leurs sont affectés un ou plusieurs paquets de données, et à tous les moments de réception, pour réceptionner les paquets de données d'autres nœuds de réseau (11), l'intensité du champ de réception étant détectée,
- en utilisant les intensités de champ de réception, pour déterminer une topologie de réseau avantageuse et pour la communiquer aux autres nœuds de réseau (11) dans un paquet de données d'organisation,
**caractérisés en ce que** l'unité de calcul est aménagée
- après sa synchronisation et son intégration dans le réseau pour la communication, pour inciter des nœuds de réseau à passer en réception en continu pour d'autres nœuds de réseau qui doivent encore être synchronisés, jusqu'à ce que tous les nœuds de réseau (11) qui doivent être synchronisés soient synchronisés ou pour que sur un nombre prédéfini d'intervalles de réception auxiliaires, aucun autre paquet de données auxiliaire ne soit réceptionné par des nœuds de réseau (11) déjà synchronisés dans le réseau.

13. Nœuds de réseau selon la revendication 11 ou nœud de réseau maître selon la revendication 12, **caractérisés en ce que** l'unité de calcul est aménagée pour réaliser le procédé selon l'une quelconque des revendications 1 à 10.

14. Utilisation d'un nœud de réseau maître (10) selon la revendication 12 et d'au moins un nœud de réseau (11) selon la revendication 11, pour construire un réseau de communication, qui est organisé et/ou mis en service d'après un procédé selon l'une quelconque des revendications 1 à 10.
